(19) Europäisches Patentamt
European Patent Office
Office européen des brevets

(11) **EP 4 401 229 A1**

(12) **EUROPEAN PATENT APPLICATION**
published in accordance with Art. 153(4) EPC

(43) Date of publication:
**17.07.2024 Bulletin 2024/29**

(21) Application number: **22867312.5**

(22) Date of filing: **02.09.2022**

(51) International Patent Classification (IPC):
*H01M 50/443* (2021.01)   *H01M 50/414* (2021.01)
*H01M 50/42* (2021.01)   *H01M 50/423* (2021.01)
*H01M 50/426* (2021.01)   *H01M 50/434* (2021.01)
*H01M 50/446* (2021.01)   *H01M 50/451* (2021.01)
*H01M 50/457* (2021.01)   *H01M 50/46* (2021.01)
*H01M 50/489* (2021.01)

(52) Cooperative Patent Classification (CPC):
**H01M 50/414; H01M 50/42; H01M 50/423;
H01M 50/426; H01M 50/434; H01M 50/443;
H01M 50/446; H01M 50/451; H01M 50/457;
H01M 50/46; H01M 50/463; H01M 50/489;
Y02E 60/10**

(86) International application number:
**PCT/JP2022/033180**

(87) International publication number:
**WO 2023/037990 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021   JP 2021148163**

(71) Applicant: **Teijin Limited
Osaka 530-0005 (JP)**

(72) Inventors:
• **ONOUE, Shuhei
Osaka-shi, Osaka 530-0005 (JP)**
• **NISHIKAWA, Satoshi
Osaka-shi, Osaka 530-0005 (JP)**

(74) Representative: **Carpmaels & Ransford LLP
One Southampton Row
London WC1B 5HA (GB)**

(54) **SEPARATOR FOR NONAQUEOUS SECONDARY BATTERY, AND NONAQUEOUS SECONDARY BATTERY**

(57)   A separator for a non-aqueous secondary battery, the separator including a porous substrate, and an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin

EP 4 401 229 A1

**Description**

Technical Field

The disclosure relates to a separator for a non-aqueous secondary battery and a non-aqueous secondary battery.

Background Art

Non-aqueous secondary batteries represented by lithium ion secondary batteries are widely used as power sources for portable electronic devices such as notebook-size personal computers, mobile phones, digital cameras and camcorders. Recently, for a non-aqueous secondary battery represented by a lithium ion secondary battery, an application thereof as a battery for electric power storage or electric vehicles is being reviewed due to the property of a high energy density thereof.

With the spread of non-aqueous secondary batteries, it is increasingly required to ensure safety and stable battery characteristics. Specific measures for ensuring safety and stable battery characteristics include increasing adhesion between the electrode and the separator.

As a separator having increased adhesiveness to an electrode, a separator including an adhesive layer containing a resin having adhesiveness to an electrode is known. For example, a separator disclosed in WO 2019/130994 and WO2020/246497 includes both a heat-resistant porous layer and an adhesive layer.

SUMMARY OF INVENTION

Technical Problem

By the way, a method for manufacturing a battery using a separator having an adhesive layer exhibiting adhesiveness to an electrode includes a method for heat-pressing a laminated body in which a separator is disposed between a positive electrode and a negative electrode without impregnating the separator with an electrolytic solution (hereinafter, also referred to as "dry heat press"), and a method for heat-pressing a laminated body in which a separator is disposed between a positive electrode and a negative electrode in a state where the laminated body is housed in an exterior material and the separator is impregnated with an electrolytic solution (hereinafter, also referred to as "wet heat press").

When an electrode is favorably bonded to a separator by dry heat press, the electrode and the separator are less likely to be displaced in a process of manufacturing a battery, and a manufacturing yield of the battery can be improved. However, even when the electrode is bonded to the separator by dry heat press, the electrode and the separator may be peeled off from each other when impregnated with an electrolytic solution. When the electrode and the separator are peeled off from each other, short circuit may occur due to external impact, expansion and contraction of the electrode caused by charge and discharge, and the like. Therefore, development of a separator excellent in adhesiveness to an electrode by wet heat press is expected.

The present disclosure has been made in view of the above circumstances.

A problem to be solved by an embodiment of the present disclosure is to provide a separator for a non-aqueous secondary battery excellent in adhesiveness to an electrode by wet heat press.

A problem to be solved by another embodiment of the present disclosure is to provide a non-aqueous secondary battery including the separator for a non-aqueous secondary battery.

Solution to Problem

The specific solutions to the problem include the following embodiments:

<1> A separator for a non-aqueous secondary battery, the separator containing:

a porous substrate; and
an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin.

<2> The separator for a non-aqueous secondary battery according to <1>, in which a surface of the porous substrate contains at least one functional group selected from the group consisting of a carbonyl group, a carboxy group, a hydroxyl group, a peroxy group and an epoxy group.

<3> The separator for a non-aqueous secondary battery according to <1> or <2>, in which the porous substrate includes a heat-resistant porous layer that contains a binder resin and inorganic particles, and the adhesive layer is provided on the heat-resistant porous layer.

<4> The separator for a non-aqueous secondary battery according to <3>, in which an arithmetic mean height Sa of a surface of the heat-resistant porous layer on an adhesive layer side is 0.7 $\mu$m or less.

<5> The separator for a non-aqueous secondary battery according to <3> or <4>, in which an adhesive strength between the adhesive layer and the heat-resistant porous layer, when heat-pressed in a state in which the separator is impregnated with an electrolytic solution, is from 0.01 N/15mm to 2.0 N/15mm.

<6> The separator for a non-aqueous secondary battery according to any one of <3> to <5>, in which the binder resin contains at least one selected from the group consisting of a wholly aromatic polyamide, a polyamideimide and a polyimide.

<7> The separator for a non-aqueous secondary battery according to any one of <3> to <6>, in which the inorganic particles contain at least one selected from the group consisting of a metal hydroxide and a metal sulfate.

<8> The separator for a non-aqueous secondary battery according to any one of <1> to <7>, in which the adhesive resin particles containing a phenyl group-containing acrylic type resin are at least one selected from the group consisting of: (iii) adhesive resin particles of a copolymer containing an acrylic type monomer unit and a styrene type monomer unit, and (iv) adhesive resin particles of a mixture containing an acrylic type resin and a styrene type resin.

<9> The separator for a non-aqueous secondary battery according to any one of <1> to <8>, in which a total adhesion amount of the adhesive resin particles and the mixture of the adhesive resin particles to the porous substrate is from 0.1 g/m$^2$ to 5.0 g/m$^2$.

<10> The separator for a non-aqueous secondary battery according to any one of <1> to <9>, in which the adhesive layer has a peak area S1 representing phenyl group of from 0.01 to 3.0, a peak area S2 representing carbonyl group of 4.0 or less, and a peak area S3 representing C-F bonds, measured by Fourier Transform Infrared Spectroscopy.

<11> The separator for a non-aqueous secondary battery according to any one of <1> to <10>, in which a mass ratio between the phenyl group-containing acrylic type resin and the polyvinylidene fluoride type resin, which are contained in the adhesive resin particles, is from 5:95 to 95:5, and in which a mass ratio between the phenyl group-containing acrylic type resin and the polyvinylidene fluoride type resin, which are contained in the mixture of the adhesive resin particles, is from 5:95 to 95:5

<12> A non-aqueous secondary battery that obtains electromotive force by lithium doping and dedoping, the non-aqueous secondary battery containing:

> a positive electrode;
> a negative electrode; and
> the separator for a non-aqueous secondary battery according to any one of <1> to <11>, the separator being disposed between the positive electrode and the negative electrode.

<13> A non-aqueous secondary battery, containing:

> a positive electrode;
> a negative electrode; and
> a separator disposed between the positive electrode and the negative electrode, in which the separator containing:
>
>> a porous substrate; and
>> an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin,
>> in which the separator is bonded to the positive electrode or the negative electrode via the adhesive layer, and
>> in which, in a case in which the separator is peeled off from an electrode, the adhesive resin particles contained in the adhesive layer adhere to both of the porous substrate and the electrode.

Advantageous Effects of Invention

According to an embodiment of the present disclosure, there is provided a separator for a non-aqueous secondary battery excellent in adhesiveness to an electrode by wet heat press.

According to another embodiment of the present disclosure, there is provided a non-aqueous secondary battery including the separator for a non-aqueous secondary battery.

DESCRIPTION OF EMBODIMENTS

Hereinafter, the embodiments will be described. Further, the description and the Examples thereof illustrate the embodiments, but do not limit the scope of the embodiments.

In the present disclosure, the numerical range denoted by using "to" represents the range inclusive of the number written before and after "to" as the minimum and maximum values.

Regarding stepwise numerical ranges designated in the present disclosure, an upper or lower limit set forth in a certain numerical range may be replaced by an upper or lower limit of another stepwise numerical range described. Besides, an upper or lower limit set forth in a certain numerical range of the numerical ranges designated in the present disclosure may be replaced by a value indicated in Examples.

In the present disclosure, the term "step" includes not only an independent step, but also the step which is not clearly distinguished from other steps but achieves the desired purpose thereof.

In the present disclosure, when the amount of each component in a composition is referred to and when a plurality of substances corresponding to each component are present in the composition, the total amount of the plurality of components present in the composition is meant unless otherwise specified.

In the present disclosure, a combination of two or more preferred aspects is a more preferred aspect.

In the present disclosure, the term "solid content" means a component excluding a solvent, and a liquid component other than the solvent, such as a low molecular weight component, is also included in the "solid content" in the present disclosure.

In the present disclosure, the term "solvent" is used to mean to include water, an organic solvent, and a mixed solvent of water and an organic solvent.

In the present disclosure, "MD (machine direction)" refers to the longitudinal direction of a porous substrate and a separator manufactured in a long shape, and "TD (transverse direction)" refers to a direction orthogonal to "MD direction" in a surface direction of the porous substrate and a separator. In the present disclosure, "TD" also refers to a width direction.

In the present disclosure, "heat resistant resin" refers to a resin having a melting point of 200°C or higher, or a resin having no melting point and a decomposition temperature of 200°C or higher. That is, the heat resistant resin in the present disclosure is a resin that is not melted or decomposed in a temperature range of lower than 200°C.

In the present disclosure, the notation "(meth)acryl" means either "acryl" or "methacryl".

In the present disclosure, "monomer unit" of a copolymer or a resin means a constituent unit of the copolymer or the resin, and means a constituent unit obtained by polymerizing a monomer.

In the present disclosure, an "adhesive strength when bonding is performed by dry heat press" is also referred to as a "dry adhesive strength", and an "adhesive strength when bonding is performed by wet heat press" is also referred to as a "wet adhesive strength".

In the present disclosure, "function of bonding by dry heat press" is also referred to as "dry adhesiveness", and "function of bonding by wet heat press" is also referred to as "wet adhesiveness".

[Separator for Non-aqueous Secondary Battery]

A separator for a non-aqueous secondary battery (hereinafter, also simply referred to as a "separator") of the present disclosure is a separator for a non-aqueous secondary battery including: a porous substrate; and an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin.

Since the separator of the present disclosure has the above-described structure, the separator is excellent in adhesiveness to an electrode by wet heat press.

A reason why the separator of the present disclosure can exhibit such an effect is not clear, but the present inventors presume the reason as follows. Note that the following presumption is not intended to limit the separator of the present disclosure, and will be described as an example.

The separator of the present disclosure includes, on one side or both sides of a porous substrate, an adhesive layer containing at least one selected from the group consisting of (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin. The phenyl group-containing acrylic type resin constituting the adhesive resin particles contained in the adhesive layer has favorable affinity with the porous substrate and an electrode, and the polyvinylidene fluoride type resin constituting the adhesive resin particles contained in the adhesive layer has favorable affinity particularly with the electrode. Therefore, when both the phenyl group-containing acrylic type resin and the polyvinylidene fluoride type resin act, a high adhesive strength is exhibited between the adhesive layer and the porous substrate and between the adhesive layer and the electrode, and adhesiveness is maintained even in an environment where an electrolytic solution exists. As a result, it is presumed that the separator of the present disclosure is excellent in adhesiveness to the electrode by wet heat press.

In the description of the separator of the present disclosure, the "(i) adhesive resin particles containing a phenyl group-containing acrylic type resin and a polyvinylidene fluoride type resin" is also referred to as "adhesive resin particles A", and the "(ii) mixture of adhesive resin particles containing a phenyl group-containing acrylic type resin and adhesive resin particles containing a polyvinylidene fluoride type resin" is also referred to as an "adhesive resin particle mixture A". In addition, the "adhesive resin particles A and the adhesive resin particle mixture A" may be collectively referred to as "specific adhesive resin particles".

[Porous substrate]

The separator of the present disclosure includes a porous substrate.

In the present disclosure, the "porous substrate" means a substrate having pores or voids therein. Examples of such a substrate include: a microporous film; a porous sheet made of a fibrous material (examples: a nonwoven fabric or paper); and a composite porous sheet obtained by laminating, on a microporous film or a porous sheet, one or more other porous layers.

As the porous substrate in the present disclosure, a microporous film is preferable from a viewpoint of thinning and strength of the separator. In the present disclosure, the "microporous film" means a film having a large number of micropores therein, these pores being connected to each other, and capable of allowing gas or liquid to pass from one side to the other side.

A material of the porous substrate is preferably a material having electrical insulation properties, and may be either an organic material or an inorganic material.

The porous substrate desirably contains a thermoplastic resin in order to impart a shutdown function to the porous substrate. The "shutdown function" refers to a function of blocking movement of ions by closing pores of the porous substrate due to dissolution of a constituent material when temperature of a battery rises, thus preventing thermal runaway of the battery. The thermoplastic resin is preferably a thermoplastic resin having a melting point of lower than 200°C.

Examples of the thermoplastic resin include: a polyester such as polyethylene terephthalate; and a polyolefin such as polyethylene or polypropylene. Among these resins, a polyolefin is preferable as the thermoplastic resin.

As the porous substrate, a microporous film containing a polyolefin (also referred to as a "polyolefin microporous film") is preferable. Examples of the polyolefin microporous film include polyolefin microporous films applied to a conventional battery separator, and it is desirable to select a polyolefin microporous film having sufficient mechanical characteristics and ion permeability from among these films.

The polyolefin microporous film is preferably a microporous film containing polyethylene (also referred to as a "polyethylene microporous film") from a viewpoint of exhibiting a shutdown function. When the polyolefin microporous film contains polyethylene, the content of polyethylene is preferably 95% by mass or more with respect to the mass of the entire polyolefin microporous film.

The polyolefin microporous film is preferably a microporous film containing polypropylene from a viewpoint of having heat resistance that the film is not easily broken when the film is exposed to a high temperature.

The polyolefin microporous film is preferably a microporous film containing polyethylene and polypropylene from a viewpoint of having a shutdown function and heat resistance that the film is not easily broken when the film is exposed to a high temperature. Examples of such a polyolefin microporous film include a microporous film in which polyethylene and polypropylene are mixed in one layer, and a microporous film having a laminated structure of two or more layers, in which at least one layer contains polyethylene and at least one layer contains polypropylene.

When the polyolefin microporous film is a microporous film containing polyethylene and polypropylene, the content of polyethylene and the content of polypropylene are preferably 95% by mass or more and 5% by mass or less, respectively, with respect to the mass of the entire polyolefin microporous film from a viewpoint of having both the shutdown function and the heat resistance in a well-balanced manner.

A weight average molecular weight (Mw) of the polyolefin contained in the polyolefin microporous film is preferably 100,000 to 5,000,000. When the Mw of the polyolefin contained in the polyolefin microporous film is 100,000 or more, sufficient mechanical characteristics can be imparted to the microporous film. Meanwhile, when the Mw of the polyolefin contained in the polyolefin microporous film is 5,000,000 or less, the shutdown characteristics of the microporous film are more favorable, and the microporous film is more easily molded.

A weight average molecular weight (Mw) of a polyolefin contained in a polyolefin microporous film is a value measured by a gel permeation chromatography (GPC) method. Specifically, the weight average molecular weight (Mw) is obtained by heating and dissolving a polyolefin microporous film in o-dichlorobenzene to obtain a sample solution, and performing measurement under conditions of a column temperature of 140°C and a flow rate of 1.0 mL/min using a GPC apparatus "HLC-8321GPC/HT type" manufactured by Tosoh Corporation as a measuring apparatus, "TSKgel GMH6-HT" and "TSKgel GMH6-HTL" manufactured by Tosoh Corporation as columns, and o-dichlorobenzene (containing 0.025% by mass 2,6-di-tert-butyl-4-methylphenol) as an eluent. Monodisperse polystyrene (manufactured by Tosoh Corporation) is used for calibration of a molecular weight.

Examples of a method for manufacturing a polyolefin microporous film include a method for extruding a molten polyolefin from a T-die to form a sheet, subjecting the sheet to a crystallization treatment, then stretching the sheet, and then subjecting the sheet to a heat treatment to form a microporous film; a method for extruding a polyolefin melted together with a plasticizer such as liquid paraffin from a T-die, cooling the molten product to form a sheet, stretching the sheet, then extracting the plasticizer, and subsequently subjecting the sheet to a heat treatment to form a microporous film.

Examples of the porous sheet made of a fibrous material include a porous sheet made of a fibrous material (examples: a nonwoven fabric or paper) such as a polyester such as polyethylene terephthalate; a polyolefin such as polyethylene or polypropylene; a heat-resistant resin such as a wholly aromatic polyamide, a polyamideimide, a polyimide, a polyethersulfone, a polysulfone, a polyetherketone, or a polyetherimide; or a cellulose.

Examples of the composite porous sheet include a sheet in which a functional layer is laminated on a microporous film or a porous sheet. The composite porous sheet is preferable from a viewpoint that a function is further added thereto by a functional layer. The composite porous sheet is obtained by a method for applying a functional layer to a microporous film or a porous sheet, a method for bonding a microporous film or a porous sheet to a functional layer with an adhesive, a method for thermally press-bonding a microporous film or a porous sheet to a functional layer, or the like.

Examples of the functional layer include a heat-resistant porous layer such as a porous layer made of a heat-resistant resin or a porous layer containing a binder resin (preferably a heat-resistant resin) and inorganic particles from a viewpoint of imparting heat resistance to the porous substrate. The heat-resistant porous layer is a coating film having a large number of micropores, allowing gas or liquid to pass therethrough from one side to the other side, and having heat resistance. In the separator of the present disclosure, preferably, the porous substrate has a heat-resistant porous layer containing a binder resin and inorganic particles, and an adhesive layer described later is formed on the heat-resistant porous layer.

The kind of the binder resin of the heat-resistant porous layer is not particularly limited as long as being able to bind inorganic particles to each other. The binder resin of the heat-resistant porous layer is preferably a heat-resistant resin from a viewpoint of improving heat resistance of the separator. The binder resin of the heat-resistant porous layer is preferably a resin that is stable to an electrolytic solution and is also electrochemically stable. The heat-resistant porous layer may contain only one kind or two or more kinds of binder resins.

Examples of the binder resin of the heat-resistant porous layer include a polyvinylidene fluoride type resin, a wholly aromatic polyamide, a polyamideimide, a polyimide, a polyether sulfone, a polysulfone, a polyether ketone, a polyketone, a polyether imide, a poly-N-vinylacetamide, a polyacrylamide, a copolymerized polyether polyamide, a fluorine type rubber, an acrylic type resin, a styrene-butadiene copolymer, a cellulose, and a polyvinyl alcohol.

The binder resin of the heat-resistant porous layer may be a particulate resin, and examples thereof include resin particles made of a polyvinylidene fluoride type resin, a fluorine type rubber, or a styrene-butadiene copolymer. The binder resin of the heat-resistant porous layer may be a water-soluble resin such as a cellulose or a polyvinyl alcohol. When a particulate resin or a water-soluble resin is used as the binder resin of the heat-resistant porous layer, the binder resin is dispersed or dissolved in water to prepare a coating liquid, and the heat-resistant porous layer can be formed on a porous substrate using the coating liquid by a dry coating method.

The binder resin of the heat-resistant porous layer preferably contains at least one selected from the group consisting of a wholly aromatic polyamide, a polyamideimide, a poly-N-vinylacetamide, a polyacrylamide, a copolymerized polyether polyamide, a polyimide, and a polyether imide from a viewpoint of excellent heat resistance, and more preferably contains at least one selected from the group consisting of a wholly aromatic polyamide, a polyamideimide, and a polyimide.

A wholly aromatic polyamide is suitable for the heat-resistant porous layer from a viewpoint of durability among binder resins as heat-resistant resins. A polyamideimide and a polyimide are suitable for the heat-resistant porous layer from a viewpoint of heat resistance.

The wholly aromatic polyamide means a polyamide having a main chain composed only of a benzene ring and an amide bond. A small amount of an aliphatic monomer may be copolymerized in the wholly aromatic polyamide. The wholly aromatic polyamide is also called an "aramid".

The wholly aromatic polyamide may be meta-type or para-type.

Examples of the meta-wholly aromatic polyamide include polymetaphenylene isophthalamide. Examples of the para-wholly aromatic polyamide include copolyparaphenylene 3,4' oxydiphenylene terephthalamide, and polyparaphenylene terephthalamide.

Among the wholly aromatic polyamides, the meta-wholly aromatic polyamide is preferable from a viewpoint of easily forming a heat-resistant porous layer and excellent oxidation reduction resistance in the electrode reaction.

Specifically, the wholly aromatic polyamide is preferably polymetaphenylene isophthalamide or copolyparaphenylene 3,4' oxydiphenylene terephthalamide, and more preferably polymetaphenylene isophthalamide.

The binder resin of the heat-resistant porous layer is preferably a polyvinylidene fluoride type resin (PVDF type resin) from a viewpoint of adhesiveness between the heat-resistant porous layer and the adhesive layer.

Examples of the polyvinylidene fluoride type resin include a homopolymer of vinylidene fluoride (that is, polyvinylidene fluoride); a copolymer of vinylidene fluoride and another monomer (a so-called polyvinylidene fluoride copolymer); and a mixture of polyvinylidene fluoride and a polyvinylidene fluoride copolymer. Examples of a monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, (meth)acrylic acid, methyl (meth)acrylate, (meth)acrylate, vinyl acetate, vinyl chloride, and acrylonitrile. The polyvinylidene fluoride copolymer may contain only one kind or two or more kinds of constituent units (so-called monomer units) derived from these monomers.

A weight average molecular weight (Mw) of the polyvinylidene fluoride type resin is preferably 600,000 to 3,000,000.

The weight average molecular weight (Mw) of the polyvinylidene fluoride type resin is a value measured by a gel permeation chromatography (GPC) method. Specifically, using a GPC apparatus "GPC-900" manufactured by JASCO Corporation as a measuring apparatus, using two columns of TSKgel SUPER AWM-H manufactured by Tosoh Corporation, using N,N-dimethylformamide as an eluent, under conditions that a column temperature is 40°C and a flow rate is 0.6 mL/min to obtain a molecular weight in terms of polystyrene.

An acid value of the polyvinylidene fluoride type resin is preferably 3 mgKOH/g to 20 mgKOH/g. The acid value of the polyvinylidene fluoride type resin can be controlled, for example, by introducing a carboxy group into the polyvinylidene fluoride type resin. The introduction and introduction amount of a carboxy group into the polyvinylidene fluoride type resin can be controlled by using a monomer having a carboxy group as a polymerization component of the polyvinylidene fluoride type resin and adjusting a polymerization ratio thereof. Examples of the monomer having a carboxy group include (meth)acrylic acid, a (meth)acrylic acid ester, maleic acid, maleic anhydride, a maleic acid ester, and fluorine-substituted products thereof.

A mass ratio of the binder resin in the heat-resistant porous layer is preferably 10% by mass to 50% by mass, more preferably 15% by mass to 45% by mass, and still more preferably 20% by mass to 40% by mass with respect to the total mass of the heat-resistant porous layer.

The inorganic particles can contribute to improvement of heat resistance of the heat-resistant porous layer.

The inorganic particles are contained in the heat-resistant porous layer, for example, in a state of being bound to each other and covered by the binder resin.

The inorganic particles preferably contain at least one selected from the group consisting of a metal hydroxide, a metal oxide, a metal nitride, a metal carbonate, and a metal sulfate.

Examples of the metal hydroxide include aluminum hydroxide, magnesium hydroxide, calcium hydroxide, chromium hydroxide, zirconium hydroxide, cerium hydroxide, nickel hydroxide, and boron hydroxide, and magnesium hydroxide is preferable. Examples of the metal oxide include silica, alumina, zirconia, and magnesium oxide. Examples of the metal nitride include boron nitride and aluminum nitride. Examples of the metal carbonate include calcium carbonate and magnesium carbonate. Examples of the metal sulfate include barium sulfate and calcium sulfate, and barium sulfate is preferable.

The inorganic particles preferably contain at least one selected from the group consisting of a metal hydroxide and a metal sulfate from a viewpoint of improving heat resistance, reducing film resistance, and reducing a friction coefficient. The heat-resistant porous layer may contain two or more kinds of inorganic particles made of different materials.

The inorganic particles may be surface-modified with a silane coupling agent or the like.

The particle shape of each of the inorganic particles is not limited, and may be a spherical shape, an elliptical shape, a plate shape, a needle shape, or an amorphous shape. The inorganic particles contained in the heat-resistant porous layer are preferably plate-shaped particles from a viewpoint of suppressing short circuit of a battery. The inorganic particles contained in the heat-resistant porous layer are preferably non-aggregated primary particles from a similar viewpoint.

A volume average particle diameter of the inorganic particles is not particularly limited, but is preferably, for example, 0.01 μm to 10 μm. When the volume average particle diameter of the inorganic particles is 0.01 μm or more, aggregation of the inorganic particles is suppressed, and a heat-resistant porous layer having higher uniformity can be formed. The volume average particle diameter of the inorganic particles is preferably 0.01 μm or more, more preferably 0.03 μm or more, and still more preferably 0.05 μm or more from such a viewpoint. When the volume average particle diameter of the inorganic particles is 10 μm or less, shrinkage of the heat-resistant porous layer when the heat-resistant porous layer is exposed to a high temperature is further suppressed, furthermore, smoothness of a surface of the heat-resistant porous layer on the adhesive layer side is improved, and as a result, an adhesive strength is also improved. The volume average particle diameter of the inorganic particles is preferably 10 μm or less, more preferably 5 μm or less, and still more preferably 1 μm or less from such a viewpoint.

The heat-resistant porous layer may contain two or more kinds of inorganic particles having different volume average particle diameters. The two or more kinds of inorganic particles having different volume average particle diameters may be made of the same material or different materials. When the heat-resistant porous layer contains two or more kinds of inorganic particles having different volume average particle diameters, preferably, the volume average particle diameter of each of the two or more kinds of inorganic particles is within the above range, and preferably, the volume average particle diameter of each of the two or more kinds of inorganic particles is within the above range and the volume average particle diameter of the whole (that is, mixed particles of inorganic particles having different volume average particle diameters) is within the above range.

The volume average particle diameter of the inorganic particles is a value measured by the following method.

The inorganic particles are dispersed in water containing a nonionic surfactant, and a particle size distribution is measured using a laser diffraction particle size distribution measuring apparatus. In a volume-based particle size distribution, a particle diameter (D50) at a cumulative volume of 50% from a smaller diameter side is taken as the volume average particle diameter (μm) of the inorganic particles.

As the nonionic surfactant, for example, Triton (registered trademark) X-100 [compound name: polyethylene glycol tert-octylphenyl ether, manufactured by The Dow Chemical Company] can be suitably used. As the laser diffraction particle size distribution measuring apparatus, for example, Mastersizer 2000 manufactured by Sysmex Corporation can be suitably used.

As a sample to be subjected to measurement of the volume average particle diameter, inorganic particles as a material of the heat-resistant porous layer or inorganic particles taken out from the separator are used. A method for taking out inorganic particles from the separator is not limited. Examples thereof include a method for heating the separator to about 800°C to cause a binder resin to disappear and taking out the inorganic particles, and a method for impregnating the separator with an organic solvent to dissolve a binder resin in the organic solvent and taking out the inorganic particles.

A mass ratio of the inorganic particles in the heat-resistant porous layer is not particularly limited, but is preferably, for example, 50% by mass to 90% by mass with respect to the total mass of the heat-resistant porous layer. When the mass ratio of the inorganic particles in the heat-resistant porous layer is 50% by mass or more with respect to the total mass of the heat-resistant porous layer, heat resistance of the separator can be suitably enhanced. The mass ratio of the inorganic particles in the heat-resistant porous layer is preferably 50% by mass or more, more preferably 55% by mass or more, and still more preferably 60% by mass or more with respect to the total mass of the heat-resistant porous layer from such a viewpoint. When the mass ratio of the inorganic particles in the heat-resistant porous layer is 90% by mass or less with respect to the total mass of the heat-resistant porous layer, for example, the heat-resistant porous layer is more hardly peeled off from a microporous film or a porous sheet adjacent to the heat-resistant porous layer. The mass ratio of the inorganic particles in the heat-resistant porous layer is preferably 90% by mass or less, more preferably 85% by mass or less, and still more preferably 80% by mass or less with respect to the total mass of the heat-resistant porous layer from such a viewpoint.

The heat-resistant porous layer may contain an additive, for example, a dispersant such as a surfactant, a wetting agent, an antifoaming agent, or a pH adjuster. These additives are added to a heat-resistant porous layer forming coating liquid for forming the heat-resistant porous layer. The dispersant, the wetting agent, the antifoaming agent, and the pH adjuster are added to the heat-resistant porous layer forming coating liquid for the purpose of improving dispersibility, coatability, or storage stability, for the purpose of improving compatibility with a microporous film or a porous sheet adjacent to the heat-resistant porous layer, for the purpose of suppressing mixing of air into the heat-resistant porous layer forming coating liquid, and for the purpose of adjusting the pH of the heat-resistant porous layer forming coating liquid, respectively.

When the porous substrate in the present disclosure is a composite porous sheet in which a heat-resistant porous layer is laminated on a microporous film or a porous sheet, the heat-resistant porous layer may be provided only on one side of the microporous film or the porous sheet, or may be provided on both sides of the microporous film or the porous sheet.

When the heat-resistant porous layer is provided only on one side of the microporous film or the porous sheet, the separator has better ion permeability. In addition, the thickness of the entire separator can be suppressed, and a battery having a higher energy density can be manufactured. When the heat-resistant porous layers are provided on both sides of the microporous film or the porous sheet, the separator has better heat resistance, and safety of the battery can be further improved. In addition, the separator is less likely to be curled, and has excellent handleability during manufacture of a battery.

The thickness of the heat-resistant porous layer is preferably 0.5 $\mu$m or more per surface, and more preferably 1.0 $\mu$m or more per surface from a viewpoint of heat resistance or handleability of the separator. In addition, the thickness of the heat-resistant porous layer is preferably 5.0 $\mu$m or less per surface, and more preferably 4.0 $\mu$m or less per surface from a viewpoint of handleability of the separator or an energy density of a battery.

When the heat-resistant porous layers are provided on both sides of a microporous film or a porous sheet, the total thickness of the heat-resistant porous layers on both sides is preferably 1.0 $\mu$m or more, and more preferably 2.0 $\mu$m or more. In addition, the total thickness of the heat-resistant porous layers on both sides is preferably 10.0 $\mu$m or less, and more preferably 8.0 $\mu$m or less.

When the heat-resistant porous layers are provided on both sides of a microporous film or a porous sheet, a difference between the thickness of the heat-resistant porous layer on one side and the thickness of the heat-resistant porous layer on the other side is preferably small, and is, for example, preferably 20% or less of the total thickness thereof on both sides.

A mass per unit area of the entire heat-resistant porous layers on both sides is preferably 1.0 g/m$^2$ to 10.0 g/m$^2$. The mass per unit area of the entire heat-resistant porous layers on both sides is preferably 1.0 g/m$^2$ or more, and more preferably 2.0 g/m$^2$ or more from a viewpoint of heat resistance or handleability of the separator. In addition, the mass per unit area of the heat-resistant porous layers is preferably 10.0 g/m$^2$ or less, and more preferably 8.0 g/m$^2$ or less from a viewpoint of handleability of the separator or an energy density of a battery.

When the heat-resistant porous layers are provided on both sides of a microporous film or a porous sheet, a difference between the mass per unit area of the heat-resistant porous layer on one side and the mass per unit area of the heat-resistant porous layer on the other side is preferably 20% by mass or less with respect to the mass per unit area of the entire heat-resistant porous layers on both sides from a viewpoint of suppressing curling of the separator.

The porosity of the heat-resistant porous layer is preferably from 30% to 80%. The porosity of the heat-resistant porous layer is preferably 30% or more, more preferably 35% or more, and still more preferably 40% or more, from a viewpoint of ion permeability of a separator, and is preferably 80% or less, more preferably 70% or less, still more preferably 60% or less from a viewpoint of mechanical strength of the heat-resistant porous layer.

The porosity $\varepsilon$ (%) of the heat-resistant porous layer is determined by the following formula.

$$\varepsilon = \{1 - (Wa/da + Wb/db + Wc/dc + ... + Wn/dn)/t\} \times 100$$

Here, the constituent materials of the heat-resistant porous layer are represented by a, b, c,..., n, the mass of each constituent material is Wa, Wb, Wc,..., or Wn (g/cm$^2$), the true density of each constituent material is represented by da, db, dc,..., or dn (g/cm$^3$), and the thickness of the heat-resistant porous layer is represented by t ($\mu$m).

An arithmetic mean height Sa of the heat-resistant porous layer on a surface on the adhesive layer side is preferably 0.7 $\mu$m or less, more preferably 0.5 $\mu$m or less, and still more preferably 0.4 $\mu$m or less. In addition, the arithmetic mean height Sa of the heat-resistant porous layer on the surface on the adhesive layer side is preferably 0.01 $\mu$m or more, and more preferably 0.05 $\mu$m or more. When the arithmetic mean height Sa of the heat-resistant porous layer on the surface on the adhesive layer side is 0.7 $\mu$m or less, irregularities on a surface of the adhesive layer provided on the heat-resistant porous layer are reduced, and an adhesive area between the adhesive layer and an electrode is increased when a heat press treatment with the electrode is performed. Therefore, an adhesive strength is increased, and as a result, a dry adhesive strength and a wet adhesive strength between the separator and the electrode are increased. Meanwhile, when the arithmetic mean height of the heat-resistant porous layer on the surface on the adhesive layer side is 0.01 $\mu$m or more, some of specific adhesive resin particles adhering onto protrusions of minute irregularities enter the electrode, and an adhesive strength is increased by an anchor effect, which is preferable.

The arithmetic mean height Sa ($\mu$m) of the heat-resistant porous layer on the surface on the adhesive layer side is measured in accordance with ISO 25178 under the following conditions. Measurement is performed in arbitrarily selected four different observation ranges, and an average value thereof is determined.

-Conditions-

Measuring apparatus: Laser microscope [VK-X1000, manufactured by KEYENCE CORPORATION]
Observation magnification: 3600 times
Observation range: 71 $\mu$m $\times$ 94 $\mu$m

The porous substrate may be subjected to various surface treatments as long as the properties of the porous substrate are not impaired. When the porous substrate is subjected to a surface treatment, wettability with a resin particle dispersion for forming the adhesive layer can be improved. Examples of the surface treatment include a corona treatment, a plasma treatment, a flame treatment, an electron beam treatment, and an ultraviolet irradiation treatment.

The porous substrate preferably has a functional group introduced on a surface thereof from a viewpoint of improving wettability. The porous substrate preferably has at least one functional group selected from the group consisting of a carbonyl group, a carboxy group, a hydroxy group, a peroxy group, and an epoxy group on a surface thereof. Examples of a method for introducing a functional group into a surface of the porous substrate include a method for performing the surface treatment described above on the surface of the porous substrate.

The thickness of the porous substrate is preferably 20.0 $\mu$m or less, and more preferably 15.0 $\mu$m or less from a viewpoint of increasing an energy density of a battery. In addition, the thickness of the porous substrate is preferably 3.0 $\mu$m or more, and more preferably 5.0 $\mu$m or more from a viewpoint of a manufacturing yield of the separator and a manufacturing yield of the battery.

The thickness of the porous substrate is a value measured with a cylindrical measurement terminal having a diameter of 5 mm using a contact type thickness meter (LITEMATIC, manufactured by Mitutoyo Corporation). Adjustment is performed during the measurement such that a load of 0.01 N is applied, any 20 points within an area of 10 cm × 10 cm are measured, and an average value thereof is calculated.

A Gurley value of the porous substrate is preferably 50 seconds/100 mL or more, and more preferably 60 seconds/100 mL or more from a viewpoint of obtaining favorable ion permeability. In addition, the Gurley value of the porous substrate is preferably 500 seconds/100 mL or less, and more preferably 400 seconds/100 mL or less from a viewpoint of suppressing short circuit of a battery.

The Gurley value of the porous substrate is a value measured in accordance with JIS P8117: 2009. As a measuring apparatus, for example, a Gurley type densometer G-B2C manufactured by Toyo Seiki Seisaku-sho, Ltd. can be suitably used.

The porous substrate preferably has a porosity of 20% to 60% from a viewpoint of obtaining an appropriate film resistance and a shutdown function.

The porosity of the porous substrate is determined by the following formula. Note that a basis weight is a mass per unit area.

$$\varepsilon = \{1 - Ws/(ds \cdot t)\} \times 100$$

In the formula, Ws represents a basis weight (g/m$^2$) of the porous substrate, ds represents a true density (g/cm$^3$) of the porous substrate, and t represents the thickness ($\mu$m) of the porous substrate.

A piercing strength of the porous substrate is preferably 200 g or more, and more preferably 250 g or more from a viewpoint of a manufacturing yield of the separator and a manufacturing yield of a battery.

The piercing strength of the porous substrate refers to a maximum piercing load (g) measured by performing a piercing test under conditions of a needle tip radius of curvature of 0.5 mm and a piercing speed of 2 mm/sec using a KES-G5 handy compression tester manufactured by KATO TECH CO., LTD.

[Adhesive Layer]

The adhesive layer in the present disclosure is a layer provided on one side or both sides of the porous substrate, and exists as an outermost layer of the separator. The adhesive layer in the present disclosure is a layer which contains at least one [that is, the specific adhesive resin particles] selected from the group consisting of (i) adhesive resin particles containing a phenyl group-containing acrylic type resin and a polyvinylidene fluoride type resin [that is, the adhesive resin particles A], and (ii) a mixture of adhesive resin particles containing a phenyl group-containing acrylic type resin and adhesive resin particles containing a polyvinylidene fluoride type resin [that is, the adhesive resin particle mixture A] and in which the specific adhesive resin particle adhere to the porous substrate.

In the separator of the present disclosure, the adhesive layer may have a structure in which a large number of specific adhesive resin particles are arranged adjacent to each other on a surface of the porous substrate to form a layer, or may have a structure in which a large number of specific adhesive resin particles are scattered on the surface of the porous substrate. When the adhesive layer has a structure in which a plurality of specific adhesive resin particles are arranged adjacent to each other on the surface of the porous substrate to form a layer, the adhesive layer may have a single-layer structure in which the specific adhesive resin particles do not overlap each other in a thickness direction, or may have a multilayer structure having two or more layers, in which a plurality of specific adhesive resin particles overlap each other in the thickness direction. The adhesive layer in the present disclosure preferably has a structure in which a large number of specific adhesive resin particles are arranged adjacent to each other on the surface of the porous substrate from a viewpoint of more excellent adhesiveness to an electrode, and preferably has a single-layer structure in which the specific adhesive resin particles do not overlap each other in the thickness direction from a viewpoint of increasing an energy density of a battery and ensuring ion permeability.

The adhesive layer in the present disclosure allows gas or liquid to pass therethrough from one side to the other side by a gap existing between the specific adhesive resin particles.

The structure in which the specific adhesive resin particles adhere to the porous substrate includes, in addition to an aspect in which a resin maintains a particle shape in a completed separator, an aspect in which some of resin particles are melted by a heat treatment or a drying treatment and do not maintain a particle shape in a separator completed by using resin particles as a material of the adhesive layer.

Since the adhesive layer in the present disclosure has a structure in which the specific adhesive resin particles adhere to the porous substrate, interfacial destruction between the porous substrate (or a heat-resistant porous layer, in a case in which the porous substrate contains a heat-resistant porous layer) and the adhesive layer hardly occurs. In addition, when the adhesive layer in the present disclosure has a structure in which the specific adhesive resin particles adhere and are connected to each other, the adhesive layer has excellent toughness, and cohesive failure of the adhesive layer hardly occurs.

The specific adhesive resin particles are made of a particulate resin having adhesiveness to an electrode of a battery. The specific adhesive resin particles are preferably resin particles that are stable to an electrolytic solution and are also electrochemically stable.

The phenyl group-containing acrylic type resin constituting the specific adhesive resin particles has favorable affinity with the porous substrate and an electrode. In addition, the polyvinylidene fluoride type resin constituting the specific adhesive resin particles has favorable affinity particularly with the electrode. When the phenyl group-containing acrylic type resin and the polyvinylidene fluoride type resin exist in the adhesive layer and act, a wet adhesive strength between the separator and the electrode can be improved.

The adhesive layer in the present disclosure may contain only (i) adhesive resin particles containing a phenyl group-containing acrylic type resin and a polyvinylidene fluoride type resin [that is, the adhesive resin particles A], may contain only (ii) a mixture of adhesive resin particles containing a phenyl group-containing acrylic type resin and adhesive resin particles containing a polyvinylidene fluoride type resin [that is, the adhesive resin particle mixture A], or may contain both the adhesive resin particles A and the adhesive resin particle mixture A.

In the present disclosure, the "acrylic type resin" means a resin containing an acrylic type monomer unit.

The phenyl group-containing acrylic type resin contained in the adhesive resin particles A is preferably a copolymer containing an acrylic type monomer unit and a styrene type monomer unit. The phenyl group-containing acrylic type resin may be a copolymer containing a monomer unit other than the acrylic type monomer unit and the styrene type monomer unit as a monomer unit.

The acrylic type monomer is preferably at least one acrylic type monomer selected from the group consisting of (meth)acrylic acid, (meth)acrylic acid salt, and (meth)acrylic acid ester.

Examples of the (meth)acrylic acid salt include sodium (meth)acrylate, potassium (meth)acrylate, magnesium (meth)acrylate, zinc (meth)acrylate, and the like.

Examples of the (meth)acrylic acid ester include methyl (meth)acrylate, ethyl (meth)acrylate, isopropyl (meth)acrylate, n-butyl (meth)acrylate, isobutyl (meth) methacrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, 2-hydroxypropyl (meth)acrylate, 4-hydroxybutyl (meth)acrylate, 2-(diethylamino) ethyl (meth)acrylate, and methoxypolyethylene glycol (meth)acrylate.

The copolymer may contain, as a monomer unit, only one kind of acrylic type monomer or two or more kinds thereof.

The styrene type monomer is a monomer having a phenyl group.

Examples of the styrene type monomer include styrene, meta-chlorostyrene, para-chlorostyrene, para-fluorostyrene, para-methoxystyrene, meta-tert-butoxystyrene, para-tert-butoxystyrene, para-vinylbenzoic acid, para-methyl-$\alpha$-methylstyrene, styrene sulfonic acid, and salts thereof (for example, sodium styrate) and the like. Among them, styrene is preferable as the styrene type monomer unit.

The phenyl group-containing acrylic type resin in the adhesive resin particles A may contain, as a monomer unit, only one kind of styrene type monomer or two or more kinds thereof.

The content of the styrene type monomer unit contained in the phenyl group-containing acrylic type resin in the adhesive resin particles A is preferably 10% by mass to 99% by mass, more preferably 20% by mass to 95% by mass, and still more preferably 30% by mass to 90% by mass with respect to the total content of the styrene type monomer unit and the acrylic type monomer unit from a viewpoint of achieving both dry adhesiveness and wet adhesiveness.

The phenyl group-containing acrylic type resin in the adhesive resin particles A preferably contains an acid group-containing monomer unit as a monomer unit from a viewpoint of dispersion stability during preparation of the copolymer.

Examples of the acid group-containing monomer include: a monomer having a carboxy group, such as (meth)acrylic acid, crotonic acid, maleic acid, fumaric acid, or itaconic acid; a monomer having a sulfonic acid group, such as vinylsulfonic acid, methylvinylsulfonic acid, (meth)allylsulfonic acid, (meth)acrylic acid-2-ethyl sulfonate, 2-acrylamide-2-methylpropanesulfonic acid, or 3-allyloxy-2-hydroxypropanesulfonic acid; a monomer having a phosphoric acid group, such as 2-(meth)acryloyloxyethyl phosphate, methyl-2-(meth)acryloyloxyethyl phosphate, or ethyl-(meth)acryloyloxyethyl phosphate; and a monomer having a hydroxy group, such as 2-hydroxyethyl (meth)acrylate, 2-hydroxypropyl (meth)acrylate, or 4-hydroxybutyl (meth)acrylate. Among these monomers, the acid group-containing monomer is preferably a monomer having a carboxy group.

The phenyl group-containing acrylic type resin in the adhesive resin particles A may contain only one kind or two or more kinds of acid group-containing monomer units as monomer units.

The content of the acid group-containing monomer unit contained in the phenyl group-containing acrylic type resin in the adhesive resin particles A is preferably 0.1% by mass to 20% by mass, more preferably 1% by mass to 10% by mass, and still more preferably 3% by mass to 7% by mass with respect to all the constituent units.

The phenyl group-containing acrylic type resin in the adhesive resin particles A preferably contains a crosslinkable monomer unit as a monomer unit from a viewpoint of adjusting the degree of swelling in an electrolytic solution. The crosslinkable monomer unit is a monomer capable of forming a crosslinked structure during or after polymerization by heating or irradiation with an energy ray.

Examples of the crosslinkable monomer include a monomer having two or more polymerizable reactive groups (so-called a polyfunctional monomer). Examples of such a polyfunctional monomer include: a divinyl compound such as divinylbenzene; a di(meth)acrylic acid ester compound such as diethylene glycol dimethacrylate, ethylene glycol dimethacrylate, diethylene glycol diacrylate, or 1,3-butylene glycol diacrylate; a tri(meth)acrylic acid ester compound such as trimethylolpropane trimethacrylate or trimethylolpropane triacrylate; and an ethylenically unsaturated monomer containing an epoxy group, such as allyl glycidyl ether or glycidyl methacrylate. Among these monomers, the crosslinkable monomer is preferably at least one selected from the group consisting of a dimethacrylic acid ester compound and an ethylenically unsaturated monomer containing an epoxy group, and more preferably at least one selected from dimethacrylic acid ester compounds from a viewpoint of easily controlling the degree of swelling.

The phenyl group-containing acrylic type resin in the adhesive resin particles A may contain only one kind or two or more kinds of crosslinkable monomer units as monomer units.

When a ratio of a crosslinkable monomer unit in the phenyl group-containing acrylic type resin in the adhesive resin particles A increases, the degree of swelling of the polymer in an electrolytic solution tends to decrease. Therefore, the content of the crosslinkable monomer unit contained in the phenyl group-containing acrylic type resin is preferably 0.1% by mass to 5% by mass, more preferably 0.2% by mass to 4% by mass, and still more preferably 0.5% by mass to 3% by mass with respect to all the constituent units.

Examples of the polyvinylidene fluoride type resin contained in the adhesive resin particles A include: a homopolymer of vinylidene fluoride (that is, polyvinylidene fluoride); a copolymer of vinylidene fluoride and another monomer (polyvinylidene fluoride copolymer); and a mixture of polyvinylidene fluoride and a polyvinylidene fluoride copolymer. Examples of a monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, vinyl acetate, vinyl chloride, and acrylonitrile. The copolymer may contain only one kind or two or more kinds of constituent units (monomer units) derived from these monomers.

The polyvinylidene fluoride copolymer preferably contains 50 mol% or more of constituent units derived from vinylidene fluoride (so-called vinylidene fluoride units) from a viewpoint of obtaining mechanical strength that can withstand pressurization and heating during manufacture of a battery.

The polyvinylidene fluoride copolymer is preferably a copolymer of vinylidene fluoride and tetrafluoroethylene, a copolymer of vinylidene fluoride and hexafluoropropylene, or a copolymer of vinylidene fluoride and trifluoroethylene, and more preferably a copolymer of vinylidene fluoride and hexafluoropropylene. The copolymer of vinylidene fluoride and hexafluoropropylene is preferably a copolymer containing 0.1 mol% to 10 mol% (preferably 0.5 mol% to 5 mol%) of constituent units derived from hexafluoropropylene (so-called hexafluoropropylene units).

A weight average molecular weight (Mw) of the polyvinylidene fluoride type resin is preferably 1000 to 5,000,000, more preferably 10,000 to 3,000,000, and still more preferably 50,000 to 2,000,000.

A method for measuring the weight average molecular weight (Mw) of the polyvinylidene fluoride type resin is as described above.

A melting point of the polyvinylidene fluoride type resin particles is preferably 110°C to 180°C. When the melting point of the polyvinylidene fluoride type resin is 110°C to 180°C, both adhesiveness and blocking resistance can be achieved. The melting point of the polyvinylidene fluoride type resin is more preferably 120°C to 170°C, and still more preferably 130°C to 160°C from such a viewpoint.

The melting point of the polyvinylidene fluoride type resin is determined from a differential scanning calorimetry curve (DSC curve) obtained by differential scanning calorimetry (DSC). A differential scanning calorimeter is used as a measuring apparatus, and 10 mg of the polyvinylidene fluoride type resin is used as a sample. A peak top of an endothermic peak obtained when the sample is heated from 30°C to 200°C at a temperature rising rate of 5°C/min in a nitrogen gas atmosphere, then the temperature is lowered from 200°C to 30°C at a temperature falling rate of 2°C/min, and the temperature is further raised from 30°C to 200°C at a temperature rising rate of 2°C/min is defined as the melting point of the polyvinylidene fluoride type resin. A Q20 Differential Scanning Calorimeter manufactured by TA Instruments can be used as the differential scanning calorimeter.

The adhesive resin particle mixture A is a mixture of adhesive resin particles containing a phenyl group-containing acrylic type resin and adhesive resin particles containing a polyvinylidene fluoride type resin.

The adhesive resin particles containing a phenyl group-containing acrylic type resin in the adhesive resin particle mixture A are not particularly limited as long as the adhesive resin particles contain the phenyl group-containing acrylic type resin described above. The adhesive resin particles containing a phenyl group-containing acrylic type resin in the adhesive resin particle mixture A may contain a component other than the phenyl group-containing acrylic type resin (so-called another component) as long as the effects of the present disclosure are not impaired, but a ratio of another component in the adhesive resin particles is preferably 10% by mass or less, and more preferably 5% by mass or less with respect to the total mass of the adhesive resin particles. A more preferable aspect is an aspect in which the adhesive resin particles containing a phenyl group-containing acrylic type resin do not substantially contain another component, and an aspect in which a ratio of another component in the adhesive resin particles is 0% by mass is particularly preferable.

The adhesive resin particles containing a polyvinylidene fluoride type resin in the adhesive resin particle mixture A are not particularly limited as long as the adhesive resin particles contain the polyvinylidene fluoride type resin described above. The adhesive resin particles containing a polyvinylidene fluoride type resin in the adhesive resin particle mixture A may contain a component other than the polyvinylidene fluoride type resin (so-called another component) as long as the effects of the present disclosure are not impaired, but a ratio of another component in the adhesive resin particles is preferably 10% by mass or less, and more preferably 5% by mass or less with respect to the total mass of the adhesive resin particles. A more preferable aspect is an aspect in which the adhesive resin particles containing a polyvinylidene fluoride type resin do not substantially contain another component, and an aspect in which a ratio of another component in the adhesive resin particles is 0% by mass is particularly preferable.

The adhesive resin particles containing a phenyl group-containing acrylic type resin contained in the adhesive resin particle mixture A are preferably at least one selected from the group consisting of (iii) adhesive resin particles made of a copolymer containing an acrylic type monomer unit and a styrene type monomer unit, and (iv) adhesive resin particles made of a mixture containing an acrylic type resin and a styrene type resin.

Hereinafter, (iii) adhesive resin particles made of a copolymer containing an acrylic type monomer unit and a styrene type monomer unit are also referred to as "adhesive resin particles X", and (iv) adhesive resin particles made of a mixture containing an acrylic type resin and a styrene type resin are also referred to as "adhesive resin particles Y".

The adhesive resin particles X are particles made of a copolymer containing an acrylic type monomer unit and a styrene type monomer unit. The adhesive resin particles X may be particles made of a copolymer containing a monomer unit other than the acrylic type monomer unit and the styrene type monomer unit as a monomer unit.

The acrylic type monomer in the adhesive resin particles X has the same meaning as the acrylic type monomer described above, a preferred aspect thereof is also similar, and thus description thereof is omitted here.

The styrene type monomer in the adhesive resin particles X has the same meaning as the styrene type monomer described above, a preferred aspect thereof is also similar, and thus description thereof is omitted here.

The content of the styrene type monomer unit contained in the copolymer is preferably 10% by mass to 99% by mass, more preferably 20% by mass to 95% by mass, and still more preferably 30% by mass to 90% by mass with respect to the total content of the styrene type monomer unit and the acrylic type monomer unit.

The adhesive resin particles Y are particles made of a mixture containing an acrylic type resin and a styrene type resin. The adhesive resin particles Y may be particles made of a mixture containing a resin other than the acrylic type resin and the styrene type resin.

The adhesive resin particles Y may be, for example, particles in which a part or the whole of a surface of the acrylic type resin particle is coated with the styrene type resin, particles in which a part or the whole of a surface of the styrene type resin particle is coated with the acrylic type resin, or particles in which the acrylic type resin and the styrene type resin are mixed in the whole of one particle. The adhesive resin particles Y are preferably particles in which a part or the whole of a surface of the acrylic type resin particle is coated with the styrene type resin from a viewpoint of blocking resistance.

The acrylic type resin in the adhesive resin particles Y may be a polymer obtained by polymerizing only an acrylic type monomer, or may be a copolymer obtained by polymerizing an acrylic type monomer and another monomer.

The content of the acrylic type monomer unit contained in the acrylic type resin is preferably 50% by mass to 100% by mass with respect to the total monomer units.

The acrylic type monomer in the adhesive resin particles Y has the same meaning as the acrylic type monomer described above, a preferred aspect thereof is also similar, and thus description thereof is omitted here.

In the present disclosure, the "styrene type resin" means a resin containing a styrene type monomer unit.

The styrene type resin in the adhesive resin particles Y may be a polymer obtained by polymerizing only a styrene type monomer, or may be a copolymer obtained by polymerizing a styrene type monomer and another monomer.

The content of the styrene type monomer unit contained in the styrene type resin is preferably 50% by mass to 100% by mass with respect to the total monomer units.

The styrene type monomer in the adhesive resin particles Y has the same meaning as the styrene type monomer described above, a preferred aspect thereof is also similar, and thus description thereof is omitted here.

The content of the styrene type resin contained in the mixture is preferably 10% by mass to 99% by mass, more preferably 20% by mass to 95% by mass, and still more preferably 30% by mass to 90% by mass with respect to the total content of the acrylic type resin and the styrene type resin in the mixture.

The adhesive resin particle mixture A contains adhesive resin particles containing a polyvinylidene fluoride type resin. The polyvinylidene fluoride type resin in the adhesive resin particle mixture A has the same meaning as the polyvinylidene fluoride type resin in the adhesive resin particles A, and a preferred aspect thereof is also similar.

A content mass ratio of the phenyl group-containing acrylic type resin to the polyvinylidene fluoride type resin in the adhesive resin particles A is preferably 5 : 95 to 95 : 5, more preferably 10 : 90 to 90 : 10, and still more preferably 20 : 80 to 80 : 20 from a viewpoint of excellent adhesiveness to an electrode by wet heat press. A content mass ratio of the phenyl group-containing acrylic type resin to the polyvinylidene fluoride type resin in the adhesive resin particle mixture A is preferably 5 : 95 to 95 : 5, more preferably 10 : 90 to 90 : 10, and still more preferably 20 : 80 to 80 : 20 from a similar viewpoint.

A glass transition temperature of the phenyl group-containing acrylic type resin is preferably 10°C to 150°C. When the glass transition temperature of the phenyl group-containing acrylic type resin is 10°C to 150°C, adhesiveness (dry adhesiveness and wet adhesiveness) of the adhesive layer to an electrode can be improved while blocking of the adhesive layer is suppressed. The glass transition temperature of the phenyl group-containing acrylic type resin is more preferably 20°C to 130°C, and still more preferably 30°C to 110°C.

The glass transition temperature of the phenyl group-containing acrylic type resin can be controlled by adjusting a copolymerization ratio of the acrylic type monomer, the styrene type monomer, and the like in the copolymer or the resin using a FOX formula as a guideline.

The glass transition temperature of the phenyl group-containing acrylic type resin is determined from a differential scanning calorimetry curve (DSC curve) obtained by differential scanning calorimetry (DSC). A differential scanning calorimeter [Q20 Differential Scanning Calorimeter, manufactured by TA Instruments] is used as a measuring apparatus, and 10 mg of the phenyl group-containing acrylic type resin is used as a sample. A temperature at a point where a straight line obtained by extending a baseline on a low temperature side to a high temperature side intersects with a tangent line which is a tangent line of a curve of a stepwise change portion and has a maximum gradient is defined as the glass transition temperature of the phenyl group-containing acrylic type resin.

A volume average particle diameter of the specific adhesive resin particles is preferably 0.01 $\mu$m or more, more preferably 0.05 $\mu$m or more, and still more preferably 0.1 $\mu$m or more from a viewpoint of forming a favorable porous structure. The volume average particle diameter of the specific adhesive resin particles is preferably 1.2 $\mu$m or less, more preferably 1.0 $\mu$m or less, and still more preferably 0.8 $\mu$m or less from a viewpoint of suppressing the thickness of the adhesive layer.

Note that, in a case of the adhesive resin particle mixture A, the volume average particle diameter of the adhesive resin particles containing a phenyl group-containing acrylic type resin and the volume average particle diameter of the adhesive resin particles containing a polyvinylidene fluoride type resin are both preferably included in the above-described range.

The volume average particle diameter of the specific adhesive resin particles is determined by the following method.

The specific adhesive resin particles are dispersed in water containing a nonionic surfactant, and a particle size distribution is measured using a laser diffraction particle size distribution measuring apparatus. In a volume-based particle size distribution, a particle diameter (D50) at a cumulative volume of 50% from a smaller diameter side is taken as the volume average particle diameter ($\mu$m) of the specific adhesive resin particles.

As the nonionic surfactant, for example, Triton (registered trademark) X-100 [compound name: polyethylene glycol tert-octylphenyl ether, manufactured by The Dow Chemical Company] can be suitably used. As the laser diffraction particle size distribution measuring apparatus, for example, Mastersizer 2000 manufactured by Sysmex Corporation can be suitably used.

An adhesion amount of the specific adhesive resin particles [that is, a total adhesion amount of the adhesive resin particles A and the resin particle mixture A] to the porous substrate is preferably 0.1 $g/m^2$ to 5.0 $g/m^2$. When the adhesion amount of the specific adhesive resin particles to the porous substrate is 0.1 $g/m^2$ or more, a wet adhesive strength between the adhesive layer and the porous substrate and a wet adhesive strength between the adhesive layer and an electrode can be further improved. The adhesion amount of the specific adhesive resin particles to the porous substrate is preferably 0.1 g/m$^2$ or more, more preferably 0.2 g/m$^2$ or more, and still more preferably 0.3 g/m$^2$ or more from such a viewpoint. When the adhesion amount of the specific adhesive resin particles to the porous substrate is 5.0 g/m$^2$ or less, swelling of the specific adhesive resin particles in an electrolytic solution is suppressed, and wet adhesiveness between the adhesive layer and the porous substrate and wet adhesiveness between the adhesive layer and the electrode can be more favorably maintained. The adhesion amount of the specific adhesive resin particles to the porous substrate is preferably 5.0 g/m$^2$ or less, more preferably 4.0 g/m$^2$ or less, still more preferably 3.0 g/m$^2$ or less, and particularly preferably 1.0 g/m$^2$ or less from such a viewpoint.

The degree of swelling of the specific adhesive resin particles in an electrolytic solution is preferably 450% or less, more preferably 400% or less, still more preferably 350% or less, and particularly preferably 300% or less from a viewpoint of sufficiently ensuring ion permeability in the adhesive layer. A lower limit of the degree of swelling of the specific adhesive resin particles in an electrolytic solution may be, for example, 110% or more.

The degree of swelling of the specific adhesive resin particles in an electrolytic solution is determined by the following method.

An aqueous dispersion of the specific adhesive resin particles is poured onto a glass plate with a metal frame having an inner size of 50 mm × 70 mm, and dried at 150°C for one hour to prepare a sheet-shaped measurement sample. The prepared measurement sample is cut out for about 1 g, and the weight W1 (g) thereof is accurately measured with an electronic balance. Thereafter, the measurement sample is immersed in an electrolytic solution [1 mol/L LiBF$_4$ ethylene carbonate : ethyl methyl carbonate (volume ratio 3 : 7)] at 60°C for 24 hours. The measurement sample after immersion is taken out from the electrolytic solution, and the electrolytic solution adhering to a surface is wiped off. Thereafter, the weight W2 (g) thereof is measured with an electronic balance, and the degree of swelling (%) of the specific adhesive resin particles is determined by the following formula.

$$\text{Degree of swelling (\%)} = (W2/W1) \times 100$$

The adhesive layer may contain resin particles other than the specific adhesive resin particles.

Examples of the resin particles other than the specific adhesive resin particles include particles of a fluorine type rubber, particles of a homopolymer or a copolymer of a vinyl nitrile compound (acrylonitrile, methacrylonitrile, or the like), particles of carboxymethyl cellulose, particles of a hydroxyalkyl cellulose, particles of a polyvinyl alcohol, particles of a polyvinyl butyral, particles of a polyvinyl pyrrolidone, particles of a polyether (polyethylene oxide, polypropylene oxide, or the like), and particles containing a mixture of two or more kinds thereof.

The adhesive layer may contain a component other than the resin particles described above (so-called another component) as long as the effects of the present disclosure are not impaired, but a ratio of another component in the adhesive layer is preferably 10% by mass or less, and more preferably 5% by mass or less with respect to the total mass of the adhesive layer. A still more preferable aspect is an aspect in which the adhesive layer contains substantially no other component.

Examples of another component include an additive added to an adhesive resin particle dispersion for forming the adhesive layer. Examples of such an additive include a dispersant such as a surfactant, a wetting agent, an antifoaming agent, and a pH adjuster.

The dispersant, the wetting agent, the antifoaming agent, and the pH adjuster are added to the adhesive resin particle dispersion for forming the adhesive layer for the purpose of improving dispersibility, coatability, or storage stability, for the purpose of improving compatibility with the porous substrate (or heat-resistant porous layer, in a case in which the porous substrate contains a heat-resistant porous layer), for the purpose of suppressing mixing of air into the adhesive resin particle dispersion, and for the purpose of pH adjustment, respectively.

A surfactant is described in paragraphs [0142] and [0143] of WO 2019/130994 A. This description is incorporated herein by reference.

The adhesive layer preferably has a peak area S1 of a phenyl group of 0.01 to 3.0 by Fourier transform infrared spectroscopy (FT-IR), a peak area S2 of a carbonyl group of 4.0 or less by FT-IR, and a peak area S3 of a C-F bond of 0.1 to 8 by FT-IR.

When the peak area S1 of a phenyl group by FT-IR is 0.01 or more, the adhesive layer can exhibit a more sufficient wet adhesive strength to the porous substrate (the heat-resistant porous layer when the porous substrate has the heat-resistant porous layer) and the electrode. The peak area S1 of a phenyl group by FT-IR is preferably 0.01 or more, more preferably 0.02 or more, and still more preferably 0.05 or more from such a viewpoint. When the peak area S1 of a phenyl group by FT-IR is 3.0 or less, swelling resistance of the adhesive layer in an electrolytic solution can be further improved. The peak area S1 of a phenyl group by FT-IR is preferably 3.0 or less, more preferably 2.5 or less, still more preferably 2.0 or less, and particularly preferably 0.5 or less from such a viewpoint.

When the peak area S2 of a carbonyl group by FT-IR is 4.0 or less, the adhesive layer can exhibit a more sufficient wet adhesive strength to the porous substrate (the heat-resistant porous layer when the porous substrate has the heat-resistant porous layer) and the electrode. In addition, swelling resistance of the adhesive layer in an electrolytic solution can be further improved. The peak area S2 of a carbonyl group by FT-IR is preferably 4.0 or less, more preferably 3 or less, still more preferably 2.0 or less, and particularly preferably 1.0 or less from such a viewpoint. The peak area S2 of a carbonyl group by FT-IR may be, for example, 0.01 or more.

When the peak area S3 of a C-F bond by FT-IR is 0.1 to 8, the adhesive layer exhibits a more sufficient wet adhesive strength particularly to the electrode, and swelling in an electrolytic solution can be suppressed. The peak area S3 of a C-F bond by FT-IR is preferably 0.1 or more, more preferably 0.3 or more, and still more preferably 0.5 or more from such a viewpoint. The peak area S3 of a C-F bond by FT-IR is preferably 8 or less, more preferably 6 or less, still more preferably 4 or less, and particularly preferably 2 or less.

The peak area S1 of a phenyl group of the adhesive layer by Fourier transform infrared spectroscopy (FT-IR) is determined by the following method. After an absorption spectrum of the adhesive layer is obtained by Fourier transform infrared spectroscopy (FT-IR) under the following conditions, baseline correction is performed on an absorption peak ($694 \ cm^{-1}$ to $710 \ cm^{-1}$) of a phenyl group, and an area (unit: dimensionless) of a range surrounded by a baseline and an absorption spectrum line is determined. Values obtained from absorption spectra in arbitrarily selected eight different ranges are averaged and taken as the peak area S1 of a phenyl group of the adhesive layer.

The peak area S2 of a carbonyl group of the adhesive layer by Fourier transform infrared spectroscopy (FT-IR) is determined by the following method. After an absorption spectrum of the adhesive layer is obtained by Fourier transform infrared spectroscopy (FT-IR) under the following conditions, baseline correction is performed on an absorption peak ($1707 \ cm^{-1}$ to $1753 \ cm^{-1}$) of a carbonyl group, and an area (unit: dimensionless) of a range surrounded by a baseline and an absorption spectrum line is determined. Values obtained from absorption spectra in arbitrarily selected eight different ranges are averaged and taken as the peak area S2 of a carbonyl group of the adhesive layer.

The peak area S3 of a C-F bond of the adhesive layer by Fourier transform infrared spectroscopy (FT-IR) is determined by the following method. After an absorption spectrum of the adhesive layer is obtained by Fourier transform infrared spectroscopy (FT-IR) under the following conditions, baseline correction is performed on an absorption peak ($862 \ cm^{-1}$ to $901 \ cm^{-1}$) of a C-F bond, and an area (unit: dimensionless) of a range surrounded by a baseline and an absorption spectrum line is determined. Values obtained from absorption spectra of arbitrarily selected eight different ranges are averaged and taken as the peak area S3 of a C-F bond of the adhesive layer.

Each of the areas is calculated by a function of the measuring apparatus.

The absorption peak of a carbonyl group observed in the range of $1707 \ cm^{-1}$ to $1753 \ cm^{-1}$ is considered to be a carbonyl group derived from (meth)acrylic in the adhesive layer. The absorption peak of a C-F bond observed in the range of $862 \ cm^{-1}$ to $901 \ cm^{-1}$ is considered to be a C-F bond derived from vinylidene fluoride of the adhesive layer.

-Conditions-

Measuring apparatus: Fourier transform infrared spectrophotometer [IRAffinity-1, manufactured by Shimadzu Corporation]
Measurement wavelength range: $400 \ cm^{-1}$ to $4000 \ cm^{-1}$
Measurement mode: transmittance
Apodizing function: Happ-Genzel
Resolution: $4 \ cm^{-1}$
Number of integrations: 10 times
Number of measurement samples: n = 8

[Characteristics of Separator]

The thickness of the separator of the present disclosure is preferably 6.0 $\mu$m or more, and more preferably 7.0 $\mu$m or more from a viewpoint of the mechanical strength of the separator. The thickness of the separator of the present disclosure is preferably 20.0 $\mu$m or less, more preferably 15.0 $\mu$m or less from a viewpoint of the energy density of the battery.

The thickness of the separator is a value measured with a cylindrical measurement terminal having a diameter of 5 mm using a contact type thickness meter (LITEMATIC, manufactured by Mitutoyo Corporation). Adjustment is performed during the measurement such that a load of 0.01 N is applied, any 20 points within an area of 10 cm $\times$ 10 cm are measured, and an average value thereof is calculated.

The puncture strength of the separator of the present disclosure is preferably from 200 g to 1000 g, and more preferably from 250 g to 600 g from a viewpoint of the mechanical strength of the separator or the short circuit resistance of the battery.

The puncture strength of the separator refers to a maximum puncture strength (g) measured by performing a puncture test under the conditions of a needle tip radius of curvature of 0.5 mm and a puncture speed of 2 mm/sec using a KES-G5 handy compression tester manufactured by Kato Tech Co., Ltd.

The porosity of the separator of the present disclosure is preferably from 30% to 60% from a viewpoint of the adhesiveness to the electrode, the handleability of the separator, the ion permeability, and the mechanical strength.

The porosity $\varepsilon$ (%) of the separator is obtained by the following formula.

$$\varepsilon = \{1 - (Wa/da + Wb/db + Wc/dc + ... + Wn/dn)/t\} \times 100$$

Here, the constituent materials of the separator are a, b, c,..., and n, the mass of each constituent material is Wa, Wb, Wc,..., or Wn $(g/cm^2)$, the true density of each constituent material is represented by da, db, dc,..., or dn $(g/cm^3)$, and the thickness of the separator is t (cm).

The separator of the present disclosure preferably has a film resistance of from 0.5 ohm·cm² to 10 ohm·cm², more preferably from 1 ohm·cm² to 8 ohm·cm² from a viewpoint of load characteristics of a battery.

The film resistance of the separator refers to a resistance value in a state where the separator is impregnated with an electrolytic solution, and is measured by an AC method. The measurement is performed at temperature 20°C using 1 mol/L $LiBF_4$-propylene carbonate : ethylene carbonate (mass ratio 1 : 1) as the electrolytic solution.

The Gurley value of the separator of the present disclosure is preferably from 50 sec/100 mL to 800 sec/100 mL, and more preferably from 80 sec/100 mL to 500 sec/100 mL, and still more preferably from 100 sec/100 mL to 400 sec/100 mL, from a viewpoint of a balance between mechanical strength and ion permeability.

The Gurley value of the porous substrate is a value measured in accordance with JIS P8117 (2009). As the measuring apparatus, for example, Gurley type densometer (G-B2C, manufactured by Toyo Seiki Seisaku-sho, Ltd.) can be suitably used.

The separator of the present disclosure has, as a value obtained by subtracting a Gurley value of the porous substrate from a Gurley value of the separator (in a state in which the heat-resistant porous layer and the adhesive layer are provided on the porous substrate), preferably 300 seconds/100 mL or less, more preferably 280 seconds/100 mL or less, and still more preferably 275 seconds/100 mL or less from a viewpoint of ion permeability. Further, the value obtained by subtracting a Gurley value of the porous substrate from a Gurley value of the separator is preferably 20 seconds/100 mL or more, and more preferably 50 seconds/100 mL or more.

The separator of the present disclosure has a shrinkage ratio, when heat-treated at 130°C for 60 minutes, in an MD direction (also referred to as "thermal shrinkage ratio") of preferably 15% or less, more preferably 12% or less, still more preferably 9% or less. The lower limit of the thermal shrinkage ratio of the separator of the present disclosure is, for example, 1% or more, and preferably may be 2% or more.

A thermal shrinkage ratio of the separator is obtained by the following measurement method.

The separator is cut out into a size of 100 mm in the MD direction × 100 mm in the TD direction, and a reference line having a length of 70 mm is drawn in the MD direction so as to pass through the center of the separator to obtain a test piece. The test piece is disposed between two sheets of A4 size paper, and then left standing in an oven at 130°C for 60 minutes. The length of the test pieces in the MD direction before and after the heat treatment are measured, the thermal shrinkage ratio is calculated from the following formula, the above operation is further performed twice, and the thermal shrinkage ratios of three test pieces are averaged to obtain the thermal shrinkage ratio of the separator.

Thermal shrinkage ratio (%) = {(length in MD direction before heat treatment - length in MD direction after heat treatment) ÷ length in MD direction before heat treatment} × 100

In the separator of the present disclosure, an adhesive strength (also referred to as a "wet adhesive strength") between the adhesive layer and the heat-resistant porous layer when the separator is heat-pressed in a state of being impregnated with an electrolytic solution (so-called wet heat press) is preferably 0.01 N/15 mm to 2.0 N/15 mm. When the wet adhesive strength between the adhesive layer and the heat-resistant porous layer is 0.01 N/15 mm or more, the adhesive layer and the heat-resistant porous layer are sufficiently bonded to each other. Therefore, the adhesive layer and the heat-resistant porous layer are hardly peeled off from each other in a battery. In addition, there is a tendency that diffusion unevenness of ions at an interface between the separator and an electrode due to an insufficient adhesive strength between the adhesive layer and the heat-resistant porous layer is suppressed. The wet adhesive strength between the adhesive layer and the heat-resistant porous layer is preferably 0.01 N/15 mm or more, more preferably 0.03 N/15 mm or more, and still more preferably 0.05 N/15 mm or more from such a viewpoint. When the wet adhesive strength between the adhesive layer and the heat-resistant porous layer is 2.0 N/15 mm or less, inhibition of diffusion of ions in a battery due to excessive bonding tends to be suppressed. The wet adhesive strength between the adhesive layer and the heat-resistant porous layer is preferably 2.0 N/15mm or less, more preferably 1.8 N/15mm or less, and still more preferably 1.6 N/15mm or less from such a viewpoint.

For the wet adhesive strength between the adhesive layer and the heat-resistant porous layer, two separators of the same kind are prepared. A laminated body in which the two separators are bonded to each other by heat press (temperature: 85°C, load: 1 MPa, press time: five minutes) using a heat press machine in an electrolytic solution is used as a measurement sample. The measurement sample is subjected to a 180° peel test in which the adhesive layer and the heat-resistant porous layer are peeled off from each other using Tensilon as a measuring apparatus. A tensile speed in the 180° peel test is 100 mm/min. A load (N) from 10 mm to 40 mm after start of the measurement is sampled at 0.4 mm intervals. An average thereof is calculated. Furthermore, loads of the three test pieces are averaged, and the averaged value is taken as a wet adhesive strength (N/15 mm) between the adhesive layer and the heat-resistant porous layer. The wet adhesive strength between the adhesive layer and the heat-resistant porous layer is specifically determined by a method described in Examples described later.

[Method of Manufacturing Separator]

The separator of the present disclosure is manufactured, for example, by the following manufacturing method A or manufacturing method B. In the manufacturing method A and the manufacturing method B, the method of forming the heat-resistant porous layer possessed by the porous substrate may be a wet coating method or a dry coating method.

The manufacturing method B may be any of the following forms B-1 to B-7. Forms B-1 to B-4 are forms in which the heat-resistant porous layer is formed by the wet coating method. Forms B-5 to B-7 are forms in which the heat-resistant porous layer is formed by the dry coating method.

In the present disclosure, the wet coating method is a method of solidifying a coating layer in a coagulation liquid, and the dry coating method is a method of drying a coating layer to solidify the coating layer.

Manufacturing method A (discontinuous manufacturing method):

A heat-resistant porous layer is formed on a microporous film or a porous sheet unwound from the roll to obtain the laminated body of the microporous film or the porous sheet and the heat-resistant porous layer, and then the laminated body is once wound around another roll. Next, the adhesive layer is formed on the laminated body unwound from the roll to obtain the separator, and the obtained separator is wound around another roll.

Manufacturing method B (continuous manufacturing method):

The heat-resistant porous layer and the adhesive layer are continuously or simultaneously formed on the microporous film or the porous sheet unwound from the roll, and the obtained separator is wound around another roll.

Form B-1:

A heat-resistant porous layer forming coating liquid is applied onto a microporous film or a porous sheet, the resultant product is immersed in a coagulation liquid to solidify the coating layer and pulled out of the coagulation liquid, and the resultant product is washed with water and dried. Then an adhesive resin particle dispersion liquid is applied onto the resultant product and dried.

Form B-2:

A heat-resistant porous layer forming coating liquid is applied onto a microporous film or a porous sheet, the resultant product is immersed in a coagulation liquid to solidify the coating layer and pulled out of the coagulation liquid, and the resultant product is washed with water. Then an adhesive resin particle dispersion liquid is applied onto the resultant product and dried.

Form B-3:

A heat-resistant porous layer forming coating liquid and an adhesive resin particle dispersion liquid are simultaneously applied in two layers onto a microporous film or a porous sheet. The resultant product is immersed in a coagulation liquid to solidify the former coating layer and pulled out of the coagulation liquid, and the resultant product is washed with water and dried.

Form B-4:

A heat-resistant porous layer forming coating liquid is applied onto a microporous film or a porous sheet, the resultant product is immersed in a coagulation liquid to solidify the coating layer and pulled out of the coagulation liquid. Washing with water and adhesion of an adhesive resin particles are performed by transporting the resultant product in a water bath. The resultant product is pulled out of the water bath and dried.

Form B-5:

A heat-resistant porous layer forming coating liquid is applied onto a microporous film or a porous sheet, and dried. Then an adhesive resin particle dispersion liquid is applied onto the resultant product, and dried.

Form B-6:

A heat-resistant porous layer forming coating liquid is applied onto a microporous film or a porous sheet. Then an adhesive resin particle dispersion liquid is applied onto the resultant product, and dried.

Form B-7:

A heat-resistant porous layer forming coating liquid and an adhesive resin particle dispersion liquid are simultaneously applied in two layers onto a microporous film or a porous sheet, and dried.
Hereinafter, details of the steps included in the manufacturing method will be described using the manufacturing method B of Form B-1 as an example.
In the manufacturing method B of Form B-1, the heat-resistant porous layer is formed on at least one side of the microporous film or the porous sheet by the wet coating method to obtain the laminated body of the microporous film or the porous sheet and the heat-resistant porous layer, and then the adhesive layer is formed on at least one side of the laminated body by the dry coating method. The manufacturing method B of Form B-1 includes the following steps (1) to (7), and the steps (1) to (7) are sequentially performed.

Step (1): Preparation of coating liquid for forming heat-resistant porous layer

The heat-resistant porous layer forming coating liquid (hereinafter, the coating liquid is referred to as a "coating liquid" in the description of the manufacturing method.) is prepared by dissolving or dispersing a binder resin and inorganic particles in a solvent. In the coating liquid, other componets other than the binder resin and inorganic particles are dissolved or dispersed as necessary.
A solvent used for preparing the coating liquid includes a solvent that dissolves the binder resin (hereinafter, also referred to as a "good solvent"). Examples of the good solvent include a polar amide solvent such as N-methylpyrrolidone, dimethylacetamide, or dimethylformamide.
The solvent used for preparing the coating liquid preferably contains a phase separation agent that induces phase separation from a viewpoint of forming a heat-resistant porous layer having a favorable porous structure. Therefore, the solvent used for preparing the coating liquid is preferably a mixed solvent of a good solvent and a phase separation agent. The phase separation agent is preferably mixed with a good solvent in such an amount that a viscosity suitable for coating can be ensured. Examples of the phase separation agent include water, methanol, ethanol, propyl alcohol, butyl alcohol, butanediol, ethylene glycol, propylene glycol, and tripropylene glycol.
The solvent used for preparing the coating liquid is preferably a mixed solvent of a good solvent and a phase separation agent, containing 60% by mass or more of the good solvent and from 5% by mass to 40% by mass of the phase separation agent from a viewpoint of forming a heat-resistant porous layer having a favorable porous structure.
The binder resin concentration of the coating liquid is preferably from 1% by mass to 20% by mass from a viewpoint of forming a heat-resistant porous layer having a favorable porous structure.
The inorganic particles concentration of the coating liquid is preferably from 2% by mass to 50% by mass from a viewpoint of forming a heat-resistant porous layer having a favorable porous structure.

Step (2): Preparation of adhesive resin particle dispersion

The specific adhesive resin particle dispersion is prepared by dispersing the adhesive resin particles in water. The surfactant may be added to the adhesive resin particle dispersion in order to enhance the dispersibility of the specific adhesive resin particles in water. The adhesive resin particle dispersion may be a commercially available product or a diluent of a commercially available product.

The concentration of the adhesive resin particles in the specific adhesive resin particle dispersion is preferably from 1% by mass to 60% by mass from a viewpoint of the coating suitability.

Step (3): Applying of coating liquid

The coating liquid is applied to at least one side of the microporous film or the porous sheet to form the coating layer on the microporous film or the porous sheet. Examples of the method of applying the coating liquid to the microporous film or the porous sheet include a knife coating method, a Meyer bar coating method, a die coating method, a reverse roll coating method, a roll coating method, a gravure coating method, a screen printing method, an inkjet method, and a spray method. When the heat-resistant porous layer is formed on both sides of the microporous film or the porous sheet, it is preferable to simultaneously apply the coating liquid to both sides of the microporous film or the porous sheet from a viewpoint of productivity.

Operation (4): Solidification of coating layer

The microporous film or the porous sheet on which the coating layer is formed is immersed in the coagulation liquid to solidify the aromatic type resin while inducing phase separation in the coating layer, thereby forming the heat-resistant porous layer. Thus, the laminated body including the microporous film or the porous sheet and the heat-resistant porous layer is obtained.

The coagulation liquid generally contains the good solvent and the phase separation agent used for preparing the coating liquid, and water. A mixing ratio between the good solvent and the phase separation agent is preferably matched with the mixing ratio of the mixed solvent used for preparing the coating liquid in terms of production. The content of water in the coagulation liquid is preferably from 40% by mass to 90% by mass from viewpoints of formation of a porous structure and productivity. The temperature of the coagulation liquid is, for example, from 20°C to 50°C.

Step (5): Washing and drying of coating layer

The laminated body is pulled up from the coagulation liquid and washed with water. The solidified liquid is removed from the laminated body by washing with water. Further, water is removed from the laminated body by drying. The water washing is performed, for example, by conveying the laminated body in a water washing bath. The drying is performed, for example, by conveying the laminated body in the high-temperature environment, applying air to the laminated body, bringing the laminated body into contact with a heat roll, or the like. The drying temperature is preferably from 40°C to 80°C.

Operation (6): Applying of adhesive resin particle dispersion

The adhesive resin particle dispersion is applied to at least one side of the laminated body. Examples of the method of applying an adhesive resin particle dispersion include the knife coating method, the gravure coating method, the Meyer bar coating method, the die coating method, the reverse roll coating method, the roll coating method, the screen printing method, the inkjet method, and the spray method.

Step (7): Drying of adhesive resin particle dispersion

The specific adhesive resin particle dispersion on the laminated body is dried to attach the adhesive resin particles to the surface of the laminated body. The drying is performed, for example, by conveying the laminated body in the high-temperature environment, applying air to the laminated body, or the like. The drying temperature is preferably from 40°C to 100°C.
The manufacturing method A for manufacturing a separator or the manufacturing method B of Form B-2 to Form B-7 can be performed by partially omitting or changing the above steps (1) to (7).

[Non-aqueous secondary battery]

A non-aqueous secondary battery of the present disclosure is a non-aqueous secondary battery that obtains an electromotive force by doping/dedoping lithium, and includes a positive electrode, a negative electrode, and a separator for a non-aqueous secondary battery of the present disclosure disposed between the positive electrode and the negative electrode. The doping means occlusion, support, adsorption, or insertion, and means a phenomenon that lithium ions enter an active material of an electrode such as a positive electrode.
The non-aqueous secondary battery of the present disclosure is a non-aqueous secondary battery including a positive electrode, a negative electrode, and a separator disposed between the positive electrode and the negative electrode, in which the separator includes a porous substrate; and an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin, the separator is bonded to the positive electrode or the negative electrode with the adhesive layer interposed therebetween, and when the separator and the electrode are peeled off from each other, the adhesive resin particles contained in the adhesive layer adhere to both the porous substrate and the electrode.

The term "separator" as used herein has the same meaning as the separator for a non-aqueous secondary battery of the present disclosure, and a preferred aspect thereof is also similar.

The separator included in the non-aqueous secondary battery of the present disclosure is bonded to an electrode via the adhesive layer, and the adhesive layer contains at least one selected from the group consisting of (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin. The phenyl group-containing acrylic resin has favorable affinity with the porous substrate and the electrode, and the polyvinylidene fluoride type resin has favorable affinity particularly with the electrode. Therefore, when both the phenyl group-containing acrylic type resin and the polyvinylidene fluoride type resin exist in the adhesive layer and act, a wet adhesive strength between the separator and the electrode can be improved.

In the description of the non-aqueous secondary battery of the present disclosure, as in the description of the separator of the present disclosure, the "(i) adhesive resin particles containing a phenyl group-containing acrylic type resin and a polyvinylidene fluoride type resin" are also referred to as "adhesive resin particles A", and the "(ii) mixture of adhesive resin particles containing a phenyl group-containing acrylic type resin and adhesive resin particles containing a polyvinylidene fluoride type resin" is also referred to as an "adhesive resin particle mixture A". In addition, the "adhesive resin particles A and the adhesive resin particle mixture A" may be collectively referred to as "specific adhesive resin particles".

The "adhesive resin particles contained in the adhesive layer" refer to the adhesive resin particles A when the adhesive layer contains only the adhesive resin particles A, refers to the adhesive resin particle mixture A when the adhesive layer contains only the adhesive resin particle mixture A, and refers to the adhesive resin particles A and the adhesive resin particle mixture A when the adhesive layer contains both the adhesive resin particles A and the adhesive resin particle mixture A.

The "porous substrate" refers to, for example, a layer (for example, the heat-resistant porous layer) that the porous substrate has on the adhesive layer side when the porous substrate is a composite porous sheet.

The separator included in the non-aqueous secondary battery of the present disclosure is bonded to an electrode via the adhesive layer, and the adhesive layer has a high wet adhesive strength with the porous substrate due to action of the phenyl group-containing acrylic type resin, and has a high wet adhesive strength with the electrode due to action of the polyvinylidene fluoride type resin. Therefore, in the non-aqueous secondary battery of the present disclosure, when the separator and the electrode are peeled off from each other, a phenomenon occurs in which the specific adhesive resin particles contained in the adhesive layer adhere to both the porous substrate and the electrode without delamination.

A ratio (porous substrate/electrode) of an adhesion amount of the adhesive resin particles A and the adhesive resin particle mixture A [specific adhesive resin particles] contained in the adhesive layer between the porous substrate and the electrode when the separator and the electrode are peeled off from each other is preferably 10/90 to 90/10, more preferably 15/85 to 85/10, and still more preferably 45/55 to 70/30.

The ratio (porous substrate/electrode) of an adhesion amount of the specific adhesive resin particles contained in the adhesive layer between the porous substrate and the electrode when the separator and the electrode are peeled off from each other is determined by the following method.

The bonded separator and electrode are peeled off from each other by 180° at a tensile speed of 100 mm/min in the MD direction of the separator. A peeled surface of the porous substrate and a peeled surface of the electrode are imaged at a magnification of 10,000 times using a scanning electron microscope. An imaging range has a size of 12 $\mu$m $\times$ 8 $\mu$m. An area A1 of a specific adhesive resin particle portion and an area A2 of a porous substrate portion (that is, a portion where the porous substrate is exposed) observed on the peeled surface of the porous substrate in the obtained image, and an area B1 of a specific adhesive resin particle portion and an area B2 of an electrode portion (that is, a portion where the electrode is exposed) observed on the peeled surface of the electrode in the obtained image are determined. Each of the areas is determined by identifying a boundary between the specific adhesive resin particle portion and the porous substrate and a boundary between the specific adhesive resin particle portion and the electrode using image processing software [for example, Photoshop (registered trademark) manufactured by Adobe Systems Incorporated] and using an area measuring function. Values of "A1/A2" and values of "B1/B2" determined from images of arbitrarily selected ten visual fields are each averaged, and "average value of (A1/A2)/average value of (B 1/B2)" is defined as a ratio of a total adhesion amount of the specific adhesive resin particles contained in the adhesive layer between the porous substrate and the electrode (adhesion amount of specific adhesive resin particles in porous substrate/adhesion amount of specific adhesive resin particles in electrode) when the separator and the electrode are peeled off from each other.

The non-aqueous secondary battery of the present disclosure has a structure in which, for example, a battery element in which a negative electrode and a positive electrode face each other with a separator interposed therebetween is enclosed in an exterior material together with an electrolytic solution. The non-aqueous secondary battery of the present disclosure is suitable for a non-aqueous electrolyte secondary battery, particularly for a lithium ion secondary battery.

The non-aqueous secondary battery of the present disclosure is excellent in cycle characteristics (capacity retention ratio) of the battery because the separator of the present disclosure is excellent in adhesiveness to an electrode by wet heat press.

Hereinafter, aspect examples of the positive electrode, negative electrode, electrolyte solution, and exterior material included in the non-aqueous secondary battery according to the present disclosure will be described.

Examples of an embodiment of the positive electrode include a structure in which an active material layer containing a positive electrode active material and a binder resin is formed on a current collector. The active material layer may further contain a conductive auxiliary agent. Examples of the positive electrode active material include a lithium-containing transition metal oxide, and specific examples thereof include a compound such as $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, and $LiAl_{1/4}Ni_{3/4}O_2$. Examples of the binder resin include a resin such as a polyvinylidene fluoride type resin, and a styrene-butadiene copolymer. Examples of the conductive auxiliary agent include carbon materials such as acetylene black, Ketjen black, and graphite powder. Examples of the current collector include a metal fil such as an aluminum foil, a titanium foil, and a stainless steel foil, each having a thickness of from 5 $\mu$m to 20 $\mu$m.

Examples of an embodiment of the negative electrode include a structure in which an active material layer containing a negative electrode active material and a binder resin is formed on a current collector. The active material layer may further contain a conductive auxiliary agent. Examples of the negative electrode active material include materials capable of electrochemically occluding lithium. Specific examples thereof include carbon materials; and alloys of lithium in combination with silicon, tin, aluminum; wood's alloy, or the like. Examples of the binder resin include a resin such as a polyvinylidene fluoride type resin and a styrene-butadiene copolymer. Examples of the conductive auxiliary agent include carbon materials such as acetylene black, Ketjen black, and graphite powder. Examples of the current collector include a metal foil such as a copper foil, a nickel foil, and a stainless steel foil, each having a thickness of from 5 $\mu$m to 20 $\mu$m. Instead of using the negative electrode described above, a metal lithium foil may be used as the negative electrode.

The electrolyte solution is, for example, a solution in which a lithium salt is dissolved in a non-aqueous solvent. Examples of the lithium salt include a compound such as $LiPF_6$, $LiBF_4$, and $LiClO_4$. The lithium salt may be used singly or in combination of two or more kinds thereof. Examples of the non-aqueous solvent include a solvent, for example, cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as $\gamma$-butyrolactone and $\gamma$-valerolactone. The non-aqueous solvent may be used singly, or in combination of two or more kinds thereof. As the electrolyte solution, a solution is preferred, which is obtained by mixing a cyclic carbonate and a chain carbonate at a mass ratio (cyclic carbonate : chain carbonate) of from 20 : 80 to 40 : 60, and dissolving a lithium salt therein to give a concentration of from 0.5 mol/L to 1.5 mol/L.

Examples of the exterior material include a metal can and an aluminum laminated film pack. The shape of the battery may be, for example, a shape of a square shape, a cylindrical shape, a coin shape, and the like, but the separator of the present disclosure is suitable for any one of these shapes.

[Method for Manufacturing Non-aqueous Secondary Battery]

Examples of a method for manufacturing a non-aqueous secondary battery according to the present disclosure include a first manufacturing method including: a lamination step of manufacturing a laminated body in which the separator of the present disclosure is disposed between a positive electrode and a negative electrode; a dry bonding step of dry heat-pressing the laminated body to bond at least one of the positive electrode and the negative electrode to the separator; and a sealing step of sealing the laminated body that has been subjected to the dry bonding step inside an exterior material together with an electrolytic solution.

In addition, examples of the method for manufacturing a non-aqueous secondary battery according to the present disclosure include a second manufacturing method including: a lamination step of manufacturing a laminated body in which the separator of the present disclosure is disposed between a positive electrode and a negative electrode; a sealing step of sealing the laminated body inside an exterior material together with an electrolytic solution; and a wet bonding step of wet heat-pressing the laminated body that has been subjected to the sealing step from the outside of the exterior material to bond at least one of the positive electrode and the negative electrode to the separator.

(First Manufacturing Method)

The lamination step is a step of manufacturing a laminated body in which the separator of the present disclosure is disposed between a positive electrode and a negative electrode. The lamination step may be, for example, a step of disposing the separator of the present disclosure between a positive electrode and a negative electrode and winding the obtained product in a length direction to manufacture a wound body (so-called wound type laminated body), or a step of laminating at least one positive electrode, at least one separator, and at least one negative electrode in this order to manufacture a laminated body.

The dry bonding step is a step of dry heat-pressing the laminated body to bond at least one of the positive electrode and the negative electrode to the separator.

The dry bonding step may be performed before the laminated body is housed in an exterior material (for example, an aluminum laminate film pack), or may be performed after the laminated body is housed in the exterior material. That is, the laminated body in which the electrode and the separator are bonded to each other by dry heat press may be housed in the exterior material, or after the laminated body is housed in the exterior material, dry heat press may be performed from the outside of the exterior material to bond the electrode to the separator.

Press temperature in the dry bonding step is preferably 50°C to 120°C, more preferably 60°C to 110°C, and still more preferably 70°C to 100°C.

When the press temperature in the dry bonding step is within the above range, bonding between the electrode and the separator is moderately favorable, and the separator can be moderately expanded in a width direction. Therefore, short circuit of a battery tends to hardly occur. In addition, since the electrode and the separator are moderately bonded to each other, impregnation with an electrolytic solution tends to be hardly inhibited.

Press pressure in the dry bonding step is preferably 0.1 MPa to 10 MPa, and more preferably 0.5 MPa to 5 MPa.

Press time in the dry bonding step is preferably adjusted according to press temperature and press pressure, and is adjusted, for example, in a range of 0.1 minutes to 60 minutes.

After the lamination step and before the dry bonding step, the laminated body may be pressed at room temperature (pressurized at room temperature) to perform temporal bonding of the laminated body.

The sealing step is a step of sealing the laminated body that has been subjected to the dry bonding step inside an exterior material together with an electrolytic solution.

In the sealing step, for example, an electrolytic solution is injected into an exterior material in which the laminated body is housed, and then an opening of the exterior material is sealed. The opening of the exterior material is sealed by, for example, bonding the opening of the exterior material with an adhesive or heating and pressurizing the opening of the exterior material to thermally press-bond the opening. The inside of the exterior body is preferably brought into a vacuum state before the opening of the exterior material is sealed.

In the sealing step, it is preferable to heat-press the laminated body from the outside of the exterior material at the same time as heating and pressurizing the opening of the exterior material to thermally press-bond the opening. By performing a heat press treatment (so-called wet heat press) in a state where the laminated body and the electrolytic solution coexist, bonding between the electrode and the separator is further strengthened.

Press temperature of the wet heat press performed in the sealing step is preferably 60°C to 110°C, press pressure is preferably 0.5 MPa to 5 MPa, and press time is preferably adjusted according to the press temperature and the press pressure, for example, adjusted in a range of 0.5 minutes to 60 minutes.

(Second Manufacturing Method)

The lamination step is a step of manufacturing a laminated body in which the separator of the present disclosure is disposed between a positive electrode and a negative electrode. Similarly to the lamination step in the first manufacturing method, the lamination step may be, for example, a step of disposing the separator of the present disclosure between a positive electrode and a negative electrode and winding the obtained product in a length direction to manufacture a wound body (so-called wound type laminated body), or a step of laminating at least one positive electrode, at least one separator, and at least one negative electrode in this order to manufacture a laminated body.

The sealing step is a step of sealing the laminated body inside an exterior material together with an electrolytic solution.

In the sealing step, for example, an electrolytic solution is injected into an exterior material (for example, an aluminum laminate film pack) in which the laminated body is housed, and then an opening of the exterior material is sealed. The opening of the exterior material is sealed by, for example, bonding the opening of the exterior material with an adhesive or heating and pressurizing the opening of the exterior material to thermally press-bond the opening. The inside of the exterior body is preferably brought into a vacuum state before the opening of the exterior material is sealed.

The wet bonding step is a step of heat-pressing the laminated body that has been subjected to the sealing step, that is, the laminated body housed in the exterior material together with the electrolytic solution to a heat press treatment from the outside of the exterior material (so-called wet heat press) to bond at least one of the positive electrode and the negative electrode to the separator.

Press temperature in the wet bonding step is preferably 60°C to 110°C, more preferably 70°C to 100°C, and still more preferably 70°C to 90°C.

When the press temperature in the wet bonding step is within the above range, decomposition of the electrolytic solution can be suppressed, bonding between the electrode and the separator is favorable, and the separator can be moderately expanded in a width direction. Therefore, short circuit of a battery tends to hardly occur.

Press pressure in the wet bonding step is preferably 0.1 MPa to 5 MPa, and more preferably 0.5 MPa to 3 MPa.

Press time in the wet bonding step is preferably adjusted according to press temperature and press pressure, and is adjusted, for example, in a range of 0.1 minutes to 60 minutes.

EXAMPLES

Hereinafter, the separator and the non-aqueous secondary battery of the present disclosure will be described more specifically with reference to Examples. Materials, used amounts, ratios, treatment procedures, and the like illustrated in the following Examples can be changed, if appropriate without departing from the spirit of the present disclosure. Therefore, the range of the separator and the non-aqueous secondary battery of the present disclosure should not be construed as being limited by the specific examples described below.

<Measurement Method and Evaluation Method>

The measurement methods and evaluation methods applied in the examples of the invention and comparative examples are as follows.

[Thicknesses of Microporous Film and Separator]

The thicknesses ($\mu$m) of the microporous film and the separator were measured with a contact type thickness meter (LITEMATIC VL-50, manufactured by Mitutoyo Corporation).

As a measuring terminal, a cylindrical terminal having a diameter of 5 mm was used, and adjustment was performed such that a load of 0.01 N was applied during the measurement. The thicknesses of arbitrary 20 points within an area of 10 cm $\times$ 10 cm were measured, and an average value thereof was determined.

[Basis weight]

A basis weight (mass per m$^2$, g/m$^2$) was obtained by cutting a sample into 10 cm $\times$ 30 cm, measuring the mass, and dividing the mass by the area.

[Mass per Unit Area of Heat-resistant Porous Layer]

The mass (g/m$^2$) per unit area of the heat-resistant porous layer was determined by subtracting a basis weight (g/m$^2$) before formation of the layer from a basis weight (g/m$^2$) after formation of the layer.

[Adhesion Amount of Adhesive Resin Particles to Heat-resistant Porous Layer]

An adhesion amount (g/m$^2$) of the adhesive resin particles contained in the adhesive layer to the heat-resistant porous layer was determined by subtracting a basis weight (g/m$^2$) before formation of the layer from a basis weight (g/m$^2$) after formation of the layer.

[Gurley Value]

The Gurley value (sec/100 mL) of each of the microporous film and the separator was measured in accordance with JIS P8117 (2009). A Gurley type densometer (G-B2C, manufactured by Toyo Seiki Seisaku-sho, Ltd.) was used as a measuring apparatus.

[Porosity of Porous substrate]

The porosity ε (%) of the porous substrate was determined by the following formula.

$$\varepsilon = \{1 - (Wa/da + Wb/db + Wc/dc +...+ Wn/dn)/t\} \times 100$$

Here, the constituent materials of the porous substrate are represented by a, b, c,..., n, the mass of each constituent material is Wa, Wb, Wc,..., or Wn (g/cm$^2$), the true density of each constituent material is represented by da, db, dc,..., or dn (g/cm$^3$), and the thickness of the porous substrate (microporous film + heat-resistant porous layer) is represented by t (μm).

[Arithmetic Mean Height Sa of Surface of Heat-resistant Porous Layer on Adhesive Layer Side]

An arithmetic mean height Sa (μm) of the heat-resistant porous layer on a surface on the adhesive layer side was measured in accordance with ISO 25178 under the following conditions. Measurement was performed in arbitrarily selected four different observation ranges, and an average value thereof was determined.

-Conditions-

Measuring apparatus: Laser microscope [VK-X1000, manufactured by KEYENCE CORPORATION]
Observation magnification: 3600 times
Observation range: 71 μm × 94 μm

[Glass Transition Temperature of Resin Particles Contained in Adhesive Layer]

Glass transition temperature of the resin particles contained in the adhesive layer was determined from a differential scanning calorimetry curve (DSC curve) obtained by differential scanning calorimetry (DSC). A differential scanning calorimeter [Q20 Differential Scanning Calorimeter, manufactured by TA Instruments] was used as a measuring apparatus, and 10 mg of the resin particles were used as a sample. A temperature at a point where a straight line obtained by extending a baseline on a low temperature side to a high temperature side intersects with a tangent line which is a tangent line of a curve of a stepwise change portion and has a maximum gradient was defined as the glass transition temperature of the resin particles.

[Melting Point of Resin Particles Contained in Adhesive Layer]

A melting point of the resin particles contained in the adhesive layer was determined from a differential scanning calorimetry curve (DSC curve) obtained by differential scanning calorimetry (DSC). A differential scanning calorimeter [Q20 Differential Scanning Calorimeter, manufactured by TA Instruments] was used as a measuring apparatus, and 10 mg of the resin particles were used as a sample. A peak top of an endothermic peak obtained when the sample was heated from 30°C to 200°C at a temperature rising rate of 5°C/min in a nitrogen gas atmosphere, then the temperature was lowered from 200°C to 30°C at a temperature falling rate of 2°C/min, and the temperature was further raised from 30°C to 200°C at a temperature rising rate of 2°C/min was defined as the melting point of the resin particles.

[Volume Average Particle Diameter of Inorganic Particles Contained in Heat-resistant Porous Layer]

The inorganic particles were dispersed in water containing Triton (registered trademark) X-100 [compound name: polyethylene glycol tert-octylphenyl ether, manufactured by The Dow Chemical Company] as a nonionic surfactant, and a particle size distribution was measured using a laser diffraction particle size distribution measuring apparatus [Mastersizer 2000, manufactured by Sysmex Corporation]. In a volume-based particle size distribution, a particle diameter (D50) at a cumulative volume of 50% from a smaller diameter side was taken as the volume average particle diameter (μm) of the inorganic particles.

[Volume Average Particle Diameter of Resin Particles Contained in Adhesive Layer]

The resin particles were dispersed in water containing Triton (registered trademark) X-100 [compound name:

polyethylene glycol tert-octylphenyl ether, manufactured by The Dow Chemical Company] as a nonionic surfactant, and a particle size distribution was measured using a laser diffraction particle size distribution measuring apparatus [Mastersizer 2000, manufactured by Sysmex Corporation]. In a volume-based particle size distribution, a particle diameter (D50) at a cumulative volume of 50% from a smaller diameter side was taken as the volume average particle diameter ($\mu$m) of the resin particles.

[Peak Area S1 of Phenyl Group of Adhesive Layer by Fourier Transform Infrared Spectroscopy]

After an absorption spectrum of the adhesive layer was obtained by Fourier transform infrared spectroscopy (FT-IR) under the following conditions, baseline correction was performed on an absorption peak (694 cm$^{-1}$ to 710 cm$^{-1}$) of a phenyl group, and an area (unit: dimensionless) of a range surrounded by a baseline and an absorption spectrum line was determined. Values obtained from absorption spectra of arbitrarily selected eight different ranges were averaged and taken as the peak area S1 of a phenyl group of the adhesive layer. Conditions for FT-IR are described below.

-Conditions-

Measuring apparatus: Fourier transform infrared spectrophotometer [IRAffinity-1, manufactured by Shimadzu Corporation]
Measurement wavelength range: 400 cm$^{-1}$ to 4000 cm$^{-1}$
Measurement mode: transmittance
Apodizing function: Happ-Genzel
Resolution: 4 cm$^{-1}$
Number of integrations: 10 times
Number of measurement samples: n = 8

[Peak Area S2 of Carbonyl Group]

After an absorption spectrum of the adhesive layer was obtained by Fourier transform infrared spectroscopy (FT-IR) under the following conditions, baseline correction was performed on an absorption peak (1707 cm$^{-1}$ to 1753 cm$^{-1}$) of a carbonyl group, and an area (unit: dimensionless) of a range surrounded by a baseline and an absorption spectrum line was determined. Values obtained from absorption spectra of arbitrarily selected eight different ranges were averaged and taken as the peak area S2 of a carbonyl group of the adhesive layer. Conditions for FT-IR are similar to those for the peak area S1.

[Peak Area S3 of C-F bond]

After an absorption spectrum of the adhesive layer was obtained by Fourier transform infrared spectroscopy (FT-IR) under the following conditions, baseline correction was performed on an absorption peak (862 cm$^{-1}$ to 901 cm$^{-1}$) of a C-F bond, and an area (unit: dimensionless) of a range surrounded by a baseline and an absorption spectrum line was determined. Values obtained from absorption spectra of arbitrarily selected eight different ranges were averaged and taken as the peak area S3 of a C-F bond of the adhesive layer. Conditions for FT-IR are similar to those for the peak area S1.

[Degree of Swelling of Resin Particles Contained in Adhesive Layer]

An aqueous dispersion of the resin particles was poured onto a glass plate with a metal frame having an inner size of 50 mm × 70 mm, and dried at 150°C for one hour to prepare a sheet-shaped measurement sample. The prepared measurement sample was cut out for about 1 g, and the weight W1 (g) thereof was accurately measured with an electronic balance. Thereafter, the measurement sample was immersed in an electrolytic solution [1 mol/L LiBF$_4$ ethylene carbonate : ethyl methyl carbonate (volume ratio 3 : 7)] at 60°C for 24 hours. The measurement sample after immersion was taken out from the electrolytic solution, the electrolytic solution adhering to a surface was wiped off. Thereafter, the weight W2 (g) thereof was measured with an electronic balance, and the degree of swelling (%) of the resin particles was determined by the following formula.

$$\text{Degree of swelling (\%)} = (W2/W1) \times 100$$

[Thermal Shrinkage Ratio of Separator]

The separator was cut out into a size of 100 mm in the MD direction × 100 mm in the TD direction. Subsequently, a reference line having a length of 70 mm was drawn in the MD direction so as to pass through a center of the cut-out separator to obtain a test piece. The test piece was placed between two A4 size sheets, and then allowed to stand in an oven at 130°C for 60 minutes. The length of the test piece in the MD direction before the heat treatment and the length of the test piece in the MD direction after the heat treatment were measured, and a thermal shrinkage ratio was calculated by the following formula. The above operation was further performed twice, and the thermal shrinkage ratios of the three test pieces were averaged to determine a thermal shrinkage ratio of the separator.

Thermal shrinkage ratio (%) = {(length in MD direction before heat treatment - length in MD direction after heat treatment)/length in MD direction before heat treatment} × 100

[Adhesive Strength Between Adhesive Layer and Heat-resistant Porous Layer: Wet Heat Press]

The separator was cut out into two pieces: a piece having a size of 18 mm in the TD direction and 75 mm in the MD direction and a piece having a size of 15 mm in the TD direction and 70 mm in the MD direction. An aluminum foil having a thickness of 20 μm was cut out into a size of 15 mm in width and 70 mm in length. The separator, the separator, and the aluminum foil were stacked in this order to prepare a laminated body, and this laminated body was housed in an aluminum laminate pack as an exterior material. Thereafter, an electrolytic solution (1 mol/L of $LiBF_4$-ethylene carbonate : diethyl carbonate : propylene carbonate [mass ratio 1 : 1 : 1]) was injected thereinto, and vacuum defoaming was repeated five times. Subsequently, an excess electrolytic solution was removed, and the pack was sealed. Thereafter, the pack was left to stand for 24 hours. Subsequently, the laminated body was heat-pressed (temperature: 85°C, load: 1 MPa, press time: five minutes) together with the pack using a heat press machine to bond the two separators in the pack to each other. Thereafter, the pack was opened, the laminated body was taken out, and the aluminum foil was removed from the laminated body to obtain a test piece.

The heat-resistant porous layer was slightly peeled off from the adhesive layer at one end in a length direction of the test piece (that is, the MD direction of the separator), and the adhesive layer side of the two separated ends was fixed to a lower chuck of Tensilon [STB-1225S, manufactured by A & D Co., Ltd.]. At this time, the adhesive layer side was fixed such that the length direction of the test piece (that is, the MD direction of the separator) was the direction of gravity. The heat-resistant porous layer was peeled off from the adhesive layer by about 2 cm from a lower end. The end was fixed to an upper chuck, and a 180° peel test was performed. A tensile speed in the 180° peel test was 100 mm/min. A load (N) from 10 mm to 40 mm after start of the measurement was sampled at 0.4 mm intervals. An average thereof was calculated. Furthermore, loads of the three test pieces are averaged, and the averaged value was taken as an adhesive strength (N/15 mm) between the adhesive layer and the heat-resistant porous layer at the time of wet heat press. In Table 2, the adhesive strength between the adhesive layer and the heat-resistant porous layer at the time of wet heat press is described as "wet adhesive strength between adhesive layer and heat-resistant porous layer".

[Adhesive Strength Between Electrode and Separator: Dry Heat Press]

97 g of lithium cobaltate powder as a positive electrode active material, 1.5 g of acetylene black as a conductive auxiliary agent, 1.5 g of polyvinylidene fluoride as a binder, and an appropriate amount of N-methyl pyrrolidone were mixed under stirring with a double-armed mixer to prepare a positive electrode slurry. This positive electrode slurry was applied to one side of an aluminum foil having a thickness of 20 μm, dried and then pressed to obtain a positive electrode having a positive electrode active material layer (one-side coating).

The positive electrode obtained above was cut out into a size of 15 mm in width and 70 mm in length. The separator was cut out into a size of 18 mm in the TD direction and 75 mm in the MD direction. An aluminum foil having a thickness of 20 μm was cut out into a size of 15 mm in width and 70 mm in length. The positive electrode, the separator, and the aluminum foil were stacked in this order to prepare a laminated body, and the laminated body was housed in an aluminum laminate pack as an exterior material. Subsequently, the inside of the pack was brought into a vacuum state using a vacuum sealer, and then the pack was sealed. Subsequently, the laminated body was heat-pressed (temperature: 85°C, load: 1 MPa, press time: 30 seconds) together with the pack using a heat press machine to bond the positive electrode and the separator in the pack to each other. Thereafter, the pack was opened, the laminated body was taken out, and the aluminum foil was removed from the laminated body to obtain a test piece.

The separator of the test piece was fixed to a lower chuck of Tensilon (STB-1225S, manufactured by A & D Company). At this time, the separator was fixed to Tensilon such that the length direction of the test piece (that is, the MD direction of the separator) was the direction of gravity. The positive electrode was peeled off from the separator by about 2 cm from a lower end. The end was fixed to an upper chuck, and a 180° peel test was performed. A tensile speed in the 180° peel test was 100 mm/min. A load (N) from 10 mm to 40 mm after start of the measurement was sampled at 0.4 mm intervals. An average thereof was calculated. Furthermore, the loads of the three test pieces were averaged to obtain an adhesive strength between the electrode and the separator (N/15 mm) at the time of dry heat press. In Table 2, the adhesive strength between the electrode and the separator at the time of dry heat press is described as "dry adhesive strength between electrode and separator".

[Adhesive Strength Between Electrode and Separator: Wet Heat Press]

97 g of lithium cobaltate powder as a positive electrode active material, 1.5 g of acetylene black as a conductive auxiliary agent, 1.5 g of polyvinylidene fluoride as a binder, and an appropriate amount of N-methyl pyrrolidone were mixed under stirring with a double-armed mixer to prepare a positive electrode slurry. This positive electrode slurry was applied to one side of an aluminum foil having a thickness of 20 $\mu$m, dried and then pressed to obtain a positive electrode having a positive electrode active material layer (one-side coating).

The positive electrode obtained above was cut out into a size of 15 mm in width and 70 mm in length. The separator was cut out into a size of 18 mm in the TD direction and 75 mm in the MD direction. An aluminum foil having a thickness of 20 $\mu$m was cut out into a size of 15 mm in width and 70 mm in length. The positive electrode, the separator, and the aluminum foil were stacked in this order to prepare a laminated body, and this laminated body was housed in an aluminum laminate pack as an exterior material. Thereafter, an electrolytic solution (1 mol/L of $LiBF_4$-ethylene carbonate : diethyl carbonate : propylene carbonate [mass ratio 1 : 1 : 1]) was injected thereinto, and vacuum defoaming was repeated five times. Subsequently, an excess electrolytic solution was removed, and the pack was sealed. Thereafter, the pack was left to stand for 24 hours. Subsequently, the laminated body was heat-pressed (temperature: 85°C, load: 1 MPa, press time: 15 seconds) together with the pack using a heat press machine to bond the positive electrode and the separator in the pack to each other. Thereafter, the pack was opened, the laminated body was taken out, and the aluminum foil was removed from the laminated body to obtain a test piece.

The separator of the test piece was fixed to a lower chuck of Tensilon (STB-1225S, manufactured by A & D Company). At this time, the separator was fixed to Tensilon such that the length direction of the test piece (that is, the MD direction of the separator) was the direction of gravity. The positive electrode was peeled off from the separator by about 2 cm from a lower end. The end was fixed to an upper chuck, and a 180° peel test was performed. A tensile speed in the 180° peel test was 100 mm/min. A load (N) from 10 mm to 40 mm after start of the measurement was sampled at 0.4 mm intervals. An average thereof was calculated. Furthermore, the loads of the three test pieces were averaged to obtain an adhesive strength between the electrode and the separator (N/15 mm) at the time of wet heat press. In Table 2, the adhesive strength between the electrode and the separator at the time of wet heat press is described as "wet adhesive strength between electrode and separator".

[Ratio of Adhesion Amount of Resin Particles When Separator and Electrode are Peeled Off from Each Other]

A ratio of an adhesion amount of the resin particles between the heat-resistant porous layer and the electrode (heat-resistant porous layer/electrode) when the separator and the electrode were peeled off from each other was determined by the following method.

A peeled surface of the heat-resistant porous layer of the separator and a peeled surface of the electrode after the measurement of the "adhesive strength between electrode and separator: wet heat press" were imaged at a magnification of 10,000 times using a scanning electron microscope [VE-8800, manufactured by KEYENCE CORPORATION]. An imaging range had a size of 12 $\mu$m $\times$ 8 $\mu$m. An area A1 of a resin particle portion and an area A2 of a heat-resistant porous layer portion (that is, a portion where the heat-resistant porous layer is exposed) observed on the peeled surface of the heat-resistant porous layer in the obtained image, and an area B 1 of a resin particle portion and an area B2 of an electrode portion (that is, a portion where the electrode is exposed) observed on the peeled surface of the electrode in the obtained image were determined. Each of the areas was determined by identifying a boundary between the resin particles and the heat-resistant porous layer and a boundary between the resin particles and the electrode using image processing software [Photoshop (registered trademark) manufactured by Adobe Systems Incorporated] and using an area measuring function. Values of "A1/A2" and values of "B 1B2" determined from images of arbitrarily selected ten visual fields were each averaged, and "average value of (A1/A2)/average value of (B 1B2)" was defined as a ratio of an adhesion amount of the resin particles between the heat-resistant porous layer and the electrode (adhesion amount of resin particles in heat-resistant porous layer/adhesion amount of resin particles in electrode) when the separator and the electrode were peeled off from each other.

[Preparation of Separator]

(Example 1)

Meta-type aramid [polymetaphenylene isophthalamide, Conex (registered trademark) manufactured by Teijin Limited); binder resin] and magnesium hydroxide particles (volume average particle diameter: 0.8 $\mu$m; inorganic particles) were mixed under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass to obtain a heat-resistant porous layer forming coating liquid.

An adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit: acrylic type monomer unit) 62 : 38, glass transition temperature 52°C, volume average particle diameter 0.5 $\mu$m] and polyvinylidene fluoride (PVDF) type resin particles [melting point: 140°C, volume average particle diameter: 0.25 $\mu$m] were dispersed in water at a mixing mass ratio of 50 : 50 was prepared.

An appropriate amount of the heat-resistant porous layer forming coating liquid was placed on a pair of Meyer bars. A polyethylene microporous film (thickness: 8 $\mu$m, porosity: 33%, Gurley value: 160 seconds/100 mL) was caused to pass between the Meyer bars, and the heat-resistant porous layer forming coating liquid was applied to both sides of the polyethylene microporous film in equal amounts. The resulting film was immersed in a coagulation liquid (DMAc : TPG : water = 30 : 8 : 62 [mass ratio], liquid temperature: 25°C) to solidify the coating layers, subsequently washed in a water washing tank at a water temperature of 25°C, and dried. Subsequently, the resulting film was caused to pass between a pair of bar coaters on which an appropriate amount of the adhesive layer forming resin particle dispersion was placed, and the adhesive layer forming resin particle dispersion was applied to both sides of the film in equal amounts, and dried. In this way, a separator (structure: adhesive layer/porous substrate (heat-resistant porous layer/polyethylene microporous film/heat-resistant porous layer)/adhesive layer) in which adhesive layers [mass per unit area: 0.5 g/m$^2$ (total on both sides)] were formed on both sides of the porous substrate which has the heat-resistant porous layers [mass per unit area: 3.0 g/m$^2$ (total on both sides)] on both sides of the polyethylene microporous film was obtained.

(Example 2)

A separator was prepared in a similar manner to Example 1 except that the adhesive layer forming resin particle dispersion was changed to an adhesive layer forming resin particle dispersion (solid content concentration: 7% by mass) in which adhesive resin particles (B) containing a phenyl group-containing acrylic type resin [resin particles made of a copolymer containing an acrylic type monomer unit and a styrene type monomer unit, content mass ratio in copolymer (styrene type monomer unit: acrylic type monomer unit) 89 : 11, glass transition temperature 50°C, volume average particle diameter 0.5 $\mu$m] were dispersed in water.

(Example 3)

A separator was prepared in a similar manner to Example 1 except that the adhesive layer forming resin particle dispersion was changed to an adhesive layer forming resin particle dispersion (solid content concentration: 7% by mass) in which adhesive resin particles (C) containing a phenyl group-containing acrylic type resin [resin particles made of a copolymer containing an acrylic type monomer unit and a styrene type monomer unit, content mass ratio in copolymer (styrene type monomer unit: acrylic type monomer unit) 18 : 82, glass transition temperature 54°C, volume average particle diameter 0.5 $\mu$m] were dispersed in water.

(Example 4)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C, volume average particle diameter: 0.25 $\mu$m] were dispersed in water at a mixing mass ratio of 70 : 30.

(Example 5)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C, volume average particle diameter: 0.25 $\mu$m] were dispersed in water at a mixing mass ratio of 30 : 70.

(Example 6)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C, volume average particle diameter: 0.25 $\mu$m] were dispersed in water at a mixing mass ratio of 90 : 10.

(Example 7)

A separator was prepared in a similar manner to Example 1 except that the adhesive layer forming resin particle dispersion was changed to an adhesive layer forming resin particle dispersion (solid content concentration: 7% by mass) in which adhesive resin particles (A) containing a phenyl group-containing acrylic type resin [resin particles made of a copolymer containing an acrylic type monomer unit and a styrene type monomer unit, content mass ratio in copolymer (styrene type monomer unit : acrylic type monomer unit) 62 : 38, glass transition temperature 52°C, volume average particle diameter 0.5 $\mu$m] and polyvinylidene fluoride (PVDF) type resin particles [melting point: 140°C, volume average particle diameter: 0.25 $\mu$m] were dispersed in water at a mixing mass ratio of 10 : 90.

(Example 8)

A separator was prepared in a similar manner to Example 1 except that the heat-resistant porous layer forming coating liquid was changed to a heat-resistant porous layer forming coating liquid obtained by mixing a meta-type aramid [polymetaphenylene isophthalamide, Conex (registered trademark) manufactured by Teijin Limited); aromatic type resin] and magnesium hydroxide particles (volume average particle diameter: 0.5 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the meta-type aramid was 5% by mass.

(Example 9)

A separator was prepared in a similar manner to Example 1 except that the mass per unit area of the heat-resistant porous layer was changed to 4.0 g/m$^2$ (total on both sides).

(Example 10)

A separator was prepared in a similar manner to Example 1 except that the heat-resistant porous layer forming coating liquid was changed to a heat-resistant porous layer forming coating liquid obtained by mixing a polyamideimide [Torlon (registered trademark) 4000TF, manufactured by Solvay; aromatic type resin] and magnesium hydroxide particles (volume average particle diameter: 0.8 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the polyamideimide was 8% by mass.

(Example 11)

A separator was prepared in a similar manner to Example 1 except that the heat-resistant porous layer forming coating liquid was changed to a heat-resistant porous layer forming coating liquid obtained by mixing a polyimide [Q-VR-X1444, manufactured by PI R&D Co., Ltd.; aromatic type resin] and magnesium hydroxide particles (volume average particle diameter: 0.8 $\mu$m; inorganic particles) under stirring with a mixed solvent of dimethylacetamide (DMAc) and tripropylene glycol (TPG) (DMAc : TPG = 90 : 10 [mass ratio]) such that a mass ratio thereof was 20 : 80 and the concentration of the polyimide was 6% by mass.

(Example 12)

A separator was prepared in a similar manner to Example 1 except that the mass per unit area of the adhesive layer was changed to 1.0 g/m$^2$ (total on both sides).

(Example 13)

A separator was prepared in a similar manner to Example 1 except that the mass per unit area of the adhesive layer was changed to 0.3 g/m$^2$ (total on both sides).

(Comparative Example 1)

A separator was prepared in a similar manner to Example 1 except that the adhesive layer forming resin particle dispersion was changed to an adhesive layer forming resin particle dispersion (solid content concentration: 7% by mass) in which phenyl group-not containing acrylic type resin particles (glass transition temperature: 56°C, volume average particle diameter: 0.5 $\mu$m) were dispersed in water.

(Comparative Example 2)

A separator was prepared in a similar manner to Example 1 except that the adhesive layer forming resin particle dispersion was changed to an adhesive layer forming resin particle dispersion (solid content concentration: 7% by mass) in which polyvinylidene fluoride (PVDF) type resin particles (melting point: 140°C, volume average particle diameter: 0.25 $\mu$m) were dispersed in water.

[Table 1]

| | Adhesive layer | | | | | | | | | Heat-resistant porous layer | | | | | Porosity of porous substrate [%] |
| | Resin particles | | | | | | | Mixing mass ratio (particles 1/particles 2) | Adhesion amount of resin particles to heat-resistant porous layer (total on both sides) [g/m²] | Binder resin | Inorganic particles | | Mass per unit area (total on both sides) [g/m²] | Arithmetic mean height [μm] | |
| | Particles 1 | | | | Particles 2 | | | | | | | | | | |
| | Kind | S1 | S2 | Volume average particle diameter [μm] | Kind | S3 | Volume average particle diameter [μm] | | | | Kind | Volume average particle diameter [μm] | | | |
| Example 1 | Adhesive resin particles (A) containing a phenyl group-containing acrylic type resin | 0.08 | 0.35 | 0.5 | PVDF type resin particles | 0.5 | 0.25 | 50/50 | 0.5 | Meta-type aramid | Mg (OH)₂ | 0.8 | 3.0 | 0.24 | 46 |
| Example 2 | Adhesive resin particles (B) containing a phenyl group-containing acrylic type resin | 0.15 | 0.14 | 0.5 | PVDF type resin particles | 0.5 | 0.25 | 50/50 | 0.5 | Meta-type aramid | Mg (OH)₂ | 0.8 | 3.0 | 0.24 | 46 |

(continued)

| | Adhesive layer | | | | | | | | | Heat-resistant porous layer | | | | | Porosity of porous substrate [%] |
|---|---|---|---|---|---|---|---|---|---|---|---|---|---|---|---|
| | Resin particles | | | | | | | Mixing mass ratio (particles 1/particles 2) | Adhesion amount of resin particles to heat-resistant porous layer (total on both sides) [g/m²] | Binder resin | Inorganic particles | | Mass per unit area (total on both sides) [g/m²] | Arithmetic mean height [μm] | |
| | Particles 1 | | | | Particles 2 | | | | | | | | | | |
| | Kind | S1 | S2 | Volume average particle diameter [μm] | Kind | S3 | Volume average particle diameter [μm] | | | | Kind | Volume average particle diameter [μm] | | | |
| Example 3 | Adhesive resin particles (C) containing a phenyl group-containing acrylic type resin | 0.03 | 0.71 | 0.5 | PVDF type resin particles | 0.5 | 0.25 | 50/50 | 0.5 | Meta-type aramid | Mg(OH)$_2$ | 0.8 | 3.0 | 0.24 | 46 |
| Example 4 | Adhesive resin particles (A) containing a phenyl group-containing acrylic type resin | 0.11 | 0.49 | 0.5 | PVDF type resin particles | 0.3 | 0.25 | 70/30 | 0.5 | Meta-type aramid | Mg(OH)$_2$ | 0.8 | 3.0 | 0.24 | 46 |

EP 4 401 229 A1

33

(continued)

| | | Adhesive layer | | | | | | | | | Heat-resistant porous layer | | | | | Porosity of porous substrate [%] |
|---|---|---|---|---|---|---|---|---|---|---|---|---|---|---|---|---|
| | | Resin particles | | | | | | Mixing mass ratio (particles 1/particles 2) | Adhesion amount of resin particles to heat-resistant porous layer (total on both sides) [g/m²] | Binder resin | Inorganic particles | | Mass per unit area (total on both sides) [g/m²] | Arithmetic mean height [μm] | |
| | | Particles 1 | | | | Particles 2 | | | | | | | | | |
| | Kind | S1 | S2 | Volume average particle diameter [μm] | Kind | S3 | Volume average particle diameter [μm] | | | | Kind | Volume average particle diameter [μm] | | | |
| Example 5 | Adhesive resin particles (A) containing a phenyl group-containing acrylic type resin | 0.05 | 0.21 | 0.5 | PVDF type resin particles | 0.7 | 0.25 | 30/70 | 0.5 | Meta-type aramid | Mg (OH)₂ | 0.8 | 3.0 | 0.24 | 46 |
| Example 6 | Adhesive resin particles (A) containing a phenyl group-containing acrylic type resin | 0.14 | 0.63 | 0.5 | PVDF type resin particles | 0.1 | 0.25 | 90/10 | 0.5 | Meta-type aramid | Mg (OH)₂ | 0.8 | 3.0 | 0.24 | 46 |

(continued)

| | | Adhesive layer | | | | | | | | Heat-resistant porous layer | | | | | Porosity of porous substrate [%] |
|---|---|---|---|---|---|---|---|---|---|---|---|---|---|---|---|---|
| | | Resin particles | | | | | | Mixing mass ratio (particles 1/particles 2) | Adhesion amount of resin particles to heat-resistant porous layer (total on both sides) [g/m²] | Binder resin | Inorganic particles | | Mass per unit area (total on both sides) [g/m²] | Arithmetic mean height [μm] | |
| | | Particles 1 | | | | Particles 2 | | | | | | | | | |
| | | Kind | S1 | S2 | Volume average particle diameter [μm] | Kind | S3 | Volume average particle diameter [μm] | | | | Kind | Volume average particle diameter [μm] | | | |
| Example 7 | Adhesive resin particles (A) containing a phenyl group-containing acrylic type resin | 0.02 | 0.07 | 0.5 | PVDF type resin particles | 0.9 | 0.25 | 10/90 | 0.5 | Meta-type aramid | Mg(OH)₂ | 0.8 | 3.0 | 0.24 | 46 |
| Example 8 | Adhesive resin particles (A) containing a phenyl group-containing acrylic type resin | 0.08 | 0.35 | 0.5 | PVDF type resin particles | 0.5 | 0.25 | 50/50 | 0.5 | Meta-type aramid | Mg(OH)₂ | 0.5 | 3.0 | 0.17 | 42 |

EP 4 401 229 A1

(continued)

| | | Adhesive layer | | | | | | | | Heat-resistant porous layer | | | | | Porosity of porous substrate [%] |
|---|---|---|---|---|---|---|---|---|---|---|---|---|---|---|---|
| | | Resin particles | | | | | | Mixing mass ratio (particles 1/particles 2) | Adhesion amount of resin particles to heat-resistant porous layer (total on both sides) [g/m²] | Binder resin | Inorganic particles | | Mass per unit area (total on both sides) [g/m²] | Arithmetic mean height [μm] | |
| | | Particles 1 | | | | Particles 2 | | | | | | | | | |
| | Kind | S1 | S2 | Volume average particle diameter [μm] | Kind | S3 | Volume average particle diameter [μm] | | | | Kind | Volume average particle diameter [μm] | | | |
| Example 9 | Adhesive resin particles (A) containing a phenyl group-containing acrylic type resin | 0.08 | 0.35 | 0.5 | PVDF type resin particles | 0.5 | 0.25 | 50/50 | 0.5 | Meta-type aramid | Mg(OH)₂ | 0.8 | 4.0 | 0.20 | 49 |
| Example 10 | Adhesive resin particles (A) containing a phenyl group-containing acrylic type resin | 0.08 | 0.35 | 0.5 | PVDF type resin particles | 0.5 | 0.25 | 50/50 | 0.5 | Polyamideimide | Mg(OH)₂ | 0.8 | 3.0 | 0.26 | 46 |

(continued)

| | | Adhesive layer | | | | | | | | | Heat-resistant porous layer | | | | | Porosity of porous substrate [%] |
|---|---|---|---|---|---|---|---|---|---|---|---|---|---|---|---|---|
| | | Resin particles | | | | | | Mixing mass ratio (particles 1/particles 2) | Adhesion amount of resin particles to heat-resistant porous layer (total on both sides) [g/m$^2$] | Binder resin | Inorganic particles | | Mass per unit area (total on both sides) [g/m$^2$] | Arithmetic mean height [$\mu$m] | |
| | | Particles 1 | | | | Particles 2 | | | | | | | | | | |
| | Kind | S1 | S2 | Volume average particle diameter [$\mu$m] | Kind | S3 | Volume average particle diameter [$\mu$m] | | | | Kind | Volume average particle diameter [$\mu$m] | | | | |
| Example 11 | Adhesive resin particles (A) containing a phenyl group-containing acrylic type resin | 0.08 | 0.35 | 0.5 | PVDF type resin particles | 0.5 | 0.25 | 50/50 | 0.5 | Polyimide | Mg (OH)$_2$ | 0.8 | 3.0 | 0.26 | 46 |
| Example 12 | Adhesive resin particles (A) containing a phenyl group-containing acrylic type resin | 0.16 | 0.69 | 0.5 | PVDF type resin particles | 1.0 | 0.25 | 50/50 | 1.0 | Meta-type aramid | Mg (OH)$_2$ | 0.8 | 3.0 | 0.24 | 46 |

(continued)

| | Adhesive layer | | | | | | | | | Heat-resistant porous layer | | | | | Porosity of porous substrate [%] |
|---|---|---|---|---|---|---|---|---|---|---|---|---|---|---|---|
| | Resin particles | | | | | | Mixing mass ratio (particles 1/particles 2) | Adhesion amount of resin particles to heat-resistant porous layer (total on both sides) [g/m²] | Binder resin | Inorganic particles | | Mass per unit area (total on both sides) [g/m²] | Arithmetic mean height [μm] | |  |
| | Particles 1 | | | | Particles 2 | | | | | | | | | | |
| | Kind | S1 | S2 | Volume average particle diameter [μm] | Kind | S3 | Volume average particle diameter [μm] | | | | Kind | Volume average particle diameter [μm] | | | | |
| Example 13 | Adhesive resin particles (A) containing a phenyl group-containing acrylic type resin | 0.05 | 0.21 | 0.5 | PVDF type resin particles | 0.3 | 0.25 | 50/50 | 0.3 | Meta-type aramid | Mg(OH)₂ | 0.8 | 3.0 | 0.24 | 46 |
| Comparative Example 1 | Phenyl group-free acrylic type resin particles | 0 | 1.85 | 0.5 | - | - | - | - | 0.5 | Meta-type aramid | Mg(OH)₂ | 0.8 | 3.0 | 0.24 | 46 |
| Comparative Example 2 | - | - | - | - | PVDF type resin particles | 1.0 | 0.25 | 0/100 | 0.5 | Meta-type aramid | Mg(OH)₂ | 0.8 | 3.0 | 0.24 | 46 |

[Table 2]

| | Gurley value of separator [seconds/100 mL] | Thermal shrinkage ratio of separator at 130°C [%] | Degree of swelling of resin particles contained in adhesive layer [%] | Wet adhesive strength between adhesive layer and heat-resistant porous layer [N/15 mm] | Wet adhesive strength between electrode and separator [N/15 mm] | Dry adhesive strength between electrode and separator [N/15 mm] | Ratio of adhesion amount of resin particles when separator and electrode are peeled off from each other (heat-resistant porous layer/electrode) |
|---|---|---|---|---|---|---|---|
| Example 1 | 240 | 7 | 220 | 0.12 | 0.09 | 0.06 | 50/50 |
| Example 2 | 245 | 7 | 160 | 0.23 | 0.12 | 0.07 | 60/40 |
| Example 3 | 250 | 7 | 270 | 0.03 | 0.04 | 0.05 | 45/55 |
| Example 4 | 245 | 7 | 250 | 0.14 | 0.09 | 0.07 | 60/40 |
| Example 5 | 235 | 7 | 180 | 0.07 | 0.08 | 0.05 | 35/65 |
| Example 6 | 250 | 7 | 290 | 0.20 | 0.07 | 0.08 | 70/30 |
| Example 7 | 230 | 7 | 140 | 0.02 | 0.05 | 0.04 | 20/80 |
| Example 8 | 260 | 5 | 220 | 0.13 | 0.11 | 0.08 | 50/50 |
| Example 9 | 265 | 6 | 220 | 0.13 | 0.10 | 0.07 | 50/50 |
| Example 10 | 270 | 7 | 220 | 0.11 | 0.08 | 0.06 | 50/50 |
| Example 11 | 275 | 7 | 220 | 0.12 | 0.09 | 0.06 | 50/50 |
| Example 12 | 245 | 7 | 220 | 0.17 | 0.13 | 0.09 | 50/50 |
| Example 13 | 235 | 7 | 220 | 0.09 | 0.06 | 0.04 | 50/50 |
| Comparative Example 1 | 235 | 7 | 460 | 0.006 | 0.02 | 0.07 | 40/60 |
| Comparative Example 2 | 240 | 7 | 120 | 0.003 | 0.01 | 0.04 | 5/95 |

As presented in Tables 1 and 2, the separators of Examples were excellent in adhesiveness to the electrode by wet heat press.

The disclosure of Japanese Patent Application No. 2021-148163 filed on September 10, 2021 is incorporated herein by reference in its entirety.

All documents, patent applications, and technical standards described in this specification are incorporated herein by reference to the same extent as if each individual document, patent application, and technical standards were specifically and individually indicated to be incorporated herein by reference.

## Claims

1. A separator for a non-aqueous secondary battery, the separator comprising:

a porous substrate; and
an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin.

2. The separator for a non-aqueous secondary battery according to claim 1, wherein a surface of the porous substrate contains at least one functional group selected from the group consisting of a carbonyl group, a carboxy group, a hydroxyl group, a peroxy group and an epoxy group.

3. The separator for a non-aqueous secondary battery according to claim 1 or 2, wherein the porous substrate includes a heat-resistant porous layer that contains a binder resin and inorganic particles, and the adhesive layer is provided on the heat-resistant porous layer.

4. The separator for a non-aqueous secondary battery according to claim 3, wherein an arithmetic mean height Sa of a surface of the heat-resistant porous layer on an adhesive layer side is 0.7 $\mu$m or less.

5. The separator for a non-aqueous secondary battery according to claim 3 or 4, wherein an adhesive strength between the adhesive layer and the heat-resistant porous layer, when heat-pressed in a state in which the separator is impregnated with an electrolytic solution, is from 0.01 N/15mm to 2.0 N/15mm.

6. The separator for a non-aqueous secondary battery according to any one of claims 3 to 5, wherein the binder resin contains at least one selected from the group consisting of a wholly aromatic polyamide, a polyamideimide and a polyimide.

7. The separator for a non-aqueous secondary battery according to any one of claims 3 to 6, wherein the inorganic particles contain at least one selected from the group consisting of a metal hydroxide and a metal sulfate.

8. The separator for a non-aqueous secondary battery according to any one of claims 1 to 7, wherein the adhesive resin particles containing a phenyl group-containing acrylic type resin are at least one selected from the group consisting of: (iii) adhesive resin particles of a copolymer containing an acrylic type monomer unit and a styrene type monomer unit, and (iv) adhesive resin particles of a mixture containing an acrylic type resin and a styrene type resin.

9. The separator for a non-aqueous secondary battery according to any one of claims 1 to 8, wherein a total adhesion amount of the adhesive resin particles and the mixture of the adhesive resin particles to the porous substrate is from 0.1 g/m$^2$ to 5.0 g/m$^2$.

10. The separator for a non-aqueous secondary battery according to any one of claims 1 to 9, wherein the adhesive layer has a peak area S1 representing phenyl group of from 0.01 to 3.0, a peak area S2 representing carbonyl group of 4.0 or less, and a peak area S3 representing C-F bonds, measured by Fourier Transform Infrared Spectroscopy.

11. The separator for a non-aqueous secondary battery according to any one of claims 1 to 10, wherein a mass ratio between the phenyl group-containing acrylic type resin and the polyvinylidene fluoride type resin, which are contained in the adhesive resin particles, is from 5:95 to 95:5, and
wherein a mass ratio between the phenyl group-containing acrylic type resin and the polyvinylidene fluoride type resin, which are contained in the mixture of the adhesive resin particles, is from 5:95 to 95:5.

12. A non-aqueous secondary battery that obtains electromotive force by lithium doping and dedoping, the non-aqueous secondary battery comprising:

    a positive electrode;
    a negative electrode; and
    the separator for a non-aqueous secondary battery according to any one of claims 1 to 11, the separator being disposed between the positive electrode and the negative electrode.

13. A non-aqueous secondary battery, comprising:

    a positive electrode;
    a negative electrode; and
    a separator disposed between the positive electrode and the negative electrode,

    wherein the separator comprises:

a porous substrate; and

an adhesive layer that is provided on one side or on both sides of the porous substrate, and that contains at least one selected from the group consisting of: (i) adhesive resin particles containing a phenyl group-containing acrylic type resin and a polyvinylidene fluoride type resin, and (ii) a mixture of adhesive resin particles containing a phenyl group-containing acrylic type resin and adhesive resin particles containing a polyvinylidene fluoride type resin,

wherein the separator is bonded to the positive electrode or the negative electrode via the adhesive layer, and

wherein, in a case in which the separator is peeled off from an electrode, the adhesive resin particles contained in the adhesive layer adhere to both of the porous substrate and the electrode.

## INTERNATIONAL SEARCH REPORT

| International application No. |
|---|
| **PCT/JP2022/033180** |

| A. | CLASSIFICATION OF SUBJECT MATTER |
|---|---|

*H01M 50/443*(2021.01)i; *H01M 50/414*(2021.01)i; *H01M 50/42*(2021.01)i; *H01M 50/423*(2021.01)i;
*H01M 50/426*(2021.01)i; *H01M 50/434*(2021.01)i; *H01M 50/446*(2021.01)i; *H01M 50/451*(2021.01)i;
*H01M 50/457*(2021.01)i; *H01M 50/46*(2021.01)i; *H01M 50/489*(2021.01)i
FI:   H01M50/443 B; H01M50/414; H01M50/42; H01M50/423; H01M50/426; H01M50/434; H01M50/443 E; H01M50/443 M; H01M50/446; H01M50/451; H01M50/457; H01M50/46; H01M50/489

According to International Patent Classification (IPC) or to both national classification and IPC

| B. | FIELDS SEARCHED |
|---|---|

Minimum documentation searched (classification system followed by classification symbols)

H01M50/443; H01M50/414; H01M50/42; H01M50/423; H01M50/426; H01M50/434; H01M50/446; H01M50/451; H01M50/457; H01M50/46; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-29315 A (TEIJIN LTD.) 21 February 2019 (2019-02-21) example 2 | 1-2, 8-13 |
| A | example 2 | 3-7 |
| A | WO 2020/246497 A1 (TEIJIN LTD.) 10 December 2020 (2020-12-10) | 1-13 |
| A | WO 2020/090395 A1 (ZEON CORP.) 07 May 2020 (2020-05-07) | 1-13 |
| A | WO 2018/168612 A1 (ZEON CORP.) 20 September 2018 (2018-09-20) | 1-13 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2022** | **11 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/033180**

| Patent document cited in search report | | | Publication date (day/month/year) | Patent family member(s) | | | Publication date (day/month/year) |
|---|---|---|---|---|---|---|---|
| JP | 2019-29315 | A | 21 February 2019 | US | 2019/0044118 | A1 | |
| | | | | example 7 | | | |
| | | | | KR | 10-2019-0015105 | A | |
| | | | | CN | 109390533 | A | |
| WO | 2020/246497 | A1 | 10 December 2020 | EP | 3919269 | A1 | |
| | | | | KR | 10-2021-0136100 | A | |
| | | | | CN | 113678312 | A | |
| WO | 2020/090395 | A1 | 07 May 2020 | US | 2021/0351475 | A1 | |
| | | | | EP | 3876304 | A1 | |
| | | | | CN | 112868133 | A | |
| | | | | KR | 10-2021-0082452 | A | |
| WO | 2018/168612 | A1 | 20 September 2018 | US | 2020/0052271 | A1 | |
| | | | | EP | 3598527 | A1 | |
| | | | | CN | 110383531 | A | |
| | | | | KR | 10-2019-0123280 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019130994 A
- WO 2020246497 A

- JP 2021148163 A